# EUROPEAN PATENT APPLICATION

(11) **EP 4 651 560 A1**
(43) Date of publication of application: **19.11.2025**
(21) Application number: 23915276.2
(22) Date of filing: 09.01.2023
(51) Int. Cl.: H04W 28/24, H04L 12/14, H04L 45/121

(54) **INFORMATION PROCESSING METHOD AND APPARATUS, COMMUNICATION DEVICE AND STORAGE MEDIUM**

(71) Applicant: Beijing Xiaomi Mobile Software Co., Ltd., Beijing 100085 (CN)
(72) Inventor: WU, Jinhua, Beijing 100085 (CN); SHEN, Yang, Beijing 100085 (CN)
(74) Representative: Gunzelmann, Rainer
(86) International application number: PCT/CN2023/071463
(87) International publication number: WO 2024/148497

(57) **Abstract**

Provided in the embodiments of the present disclosure are an information processing method and apparatus, a communication device and a storage medium. The information processing method, which is executed by a first network function, comprises: generating an association identifier, wherein the association identifier is used for associating an uplink data flow with a downlink data flow. The information processing method further comprises: receiving a monitoring report, which is sent by a second network function, of the uplink data flow and/or the downlink data flow, wherein the monitoring report carries an actual time delay of the uplink data flow or downlink data flow or actual time delays of the uplink data flow and downlink data flow; and updating a policy and charging control (PCC) rule of the uplink data flow and/or a PCC rule of the downlink data flow according to the monitoring report and the association identifier.

## Description

### FIELD

The present disclosure relates to, but is not limited to, the field of wireless communication technology, and in particular to an information processing method and apparatus, a communication device, and a storage medium.

### BACKGROUND

Mobile media related services, XR (extended reality) services such as cloud AR (augmented reality)/VR (virtual reality), etc., cloud game services, video-based machine or unmanned aerial vehicle remote control services and other services are expected to contribute more and more traffic to 5G networks. The XR services involve multimodal data flows.

Respective data flows in multimodal data often have certain or even strong correlations, such as synchronization between an audio flow and a video flow, synchronization between touch and vision, etc. There are some common characteristics in the data flows themselves of such media services, between different data flows, and these service data flows in terms of network transmission requirements. Effective recognition and utilization of these characteristics will be more conducive to transmission and control of networks and services, and will also be more conducive to improving service assurance capability and user experience.

### SUMMARY

Embodiments of the present disclosure provide an information processing method and apparatus, a communication device, and a storage medium.

According to a first aspect of an embodiment of the present disclosure, there is provided an information processing method. The method is performed by a first network function and includes: generating an association identifier, in which, the association identifier is configured to associate an uplink (UL) data flow with a downlink (DL) data flow.

According to a second aspect of an embodiment of the present disclosure, there is provided an information processing method. The method is performed by a second network function and includes: sending, by the second network function, a monitoring report of an uplink data flow and/or a downlink data flow to a first network function, or sending, by the second network function, the monitoring report to a third network function via a fourth network function, in which, the monitoring report carries an actual latency of the uplink data flow and/or the downlink data flow, the monitoring report and an association identifier configured to associate the uplink data flow with the downlink data flow are configured to update a policy and control charging (PCC) rule of the uplink data flow and/or a PCC rule of the downlink data flow.

According to a third aspect of an embodiment of the present disclosure, there is provided an information processing method. The method is performed by a third network function and includes: receiving a monitoring report of an uplink data flow and/or a downlink data flow sent by a first network function or the monitoring report forwarded by a fourth network function which is from a second network function, in which, the monitoring report carries an actual latency of the uplink data flow and/or the downlink data flow; and sending an update indication to the first network function according to the monitoring report, in which, the update indication and an association identifier configured to associate the uplink data flow with the downlink data flow are configured to update a policy and control charging (PCC) rule of the uplink data flow and/or a PCC rule of the downlink data flow.

According to a fourth aspect of an embodiment of the present disclosure, there is provided an information processing method. The method is performed by a third network function and includes: sending a round-trip latency requirement indication to a first network function, in which, the round-trip latency requirement indication is configured for the first network function to generate an association identifier, the association identifier is configured to associate an uplink data flow with a downlink data flow.

According to a fifth aspect of an embodiment of the present disclosure, there is provided an information processing apparatus. The apparatus is applied to a first network function and includes: a generating module, configured to generate an association identifier, in which, the association identifier is configured to associate an uplink data flow with a downlink data flow.

According to a sixth aspect of an embodiment of the present disclosure, there is provided an information processing apparatus. The apparatus is applied to a second network function and includes: a sending module, configured to send, by a second network function, a monitoring report of an uplink data flow and/or a downlink data flow to a first network function, or to send, by the second network function, the monitoring report to a third network function via a fourth network function, in which, the monitoring report carries an actual latency of the uplink data flow and/or the downlink data flow, the monitoring report and an association identifier configured to associate the uplink data flow with the downlink data flow are configured to update a policy and control charging (PCC) rule of the uplink data flow and/or a PCC rule of the downlink data flow.

According to a seventh aspect of an embodiment of the present disclosure, there is provided an information processing apparatus. The apparatus is applied to a third network function and includes: a receiving module, configured to receive a monitoring report of an uplink data flow and/or a downlink data flow sent by a first network function or the monitoring report forwarded by a fourth network function which is from a second network function, in which, the monitoring report carries an actual latency of the uplink data flow and/or the downlink data flow; and a first sending module, configured to send an update indication to the first network function according to the monitoring report, in which, the update indication and an association identifier configured to associate the uplink data flow with the downlink data flow are configured to update a policy and control charging (PCC) rule of the uplink data flow and/or a PCC rule of the downlink data flow.

According to an eighth aspect of an embodiment of the present disclosure, there is provided an information processing apparatus. The apparatus is applied to a third network function and includes: a second sending module, configured to send a round-trip latency requirement indication to a first network function, in which, the round-trip latency requirement indication is configured for the first network function to generate an association identifier, the association identifier is configured to associate an uplink data flow with a downlink data flow.

According to a ninth aspect of an embodiment of the present disclosure, there is provided a communication device, including: a processor, a memory, and executable instructions stored on the memory and capable of being run by the processor, in which, the processor is configured to: implement the information processing method according to the first aspect to the fourth aspect when running the executable instructions.

According to a tenth aspect of an embodiment of the present disclosure, there is provided a communication system. The communication system includes a first network function, a second network function and a third network function, in which, the first network function is configured to implement the information processing method according to the first aspect; the second network function is configured to implement the information processing method according to the second aspect; the third network function is configured to implement the information processing method according to the third aspect or the fourth aspect.

According to an eleventh aspect of an embodiment of the present disclosure, there is provided a computer storage medium, where the computer storage medium stores a executable program, and the executable program, when executed by a processor, causes the information processing method according to the first aspect to the fourth aspect to be implemented.

According to the technical solution provided by embodiments of the present disclosure, the first network function generates the association identifier configured to associate the uplink data flow with the downlink data flow. Thus, a demand for network transmission of the uplink data flow and/or the downlink data flow can be recognized by using the association identifier, and it may be conducive to improving a service assurance capability and user experience.

It should be understood that the foregoing general description and the following detailed description are illustrative and explanatory only and are not to limit the embodiments of the present disclosure.

### BRIEF DESCRIPTION OF THE DRAWINGS

The accompanying drawings, which are incorporated into the specification and constitute a part of the specification, illustrate embodiments consistent with the present disclosure and are used to explain, in combination with the description, principles of the embodiments of the present disclosure.
FIG. 1 is a schematic structural diagram of a wireless communication system according to an illustrative embodiment.
FIG. 2 is a schematic flow chart of an information processing method according to an illustrative embodiment.
FIG. 3 is a schematic flow chart of an information processing method according to an illustrative embodiment.
FIG. 4 is a schematic flow chart of an information processing method according to an illustrative embodiment.
FIG. 5 is a schematic flow chart of an information processing method according to an illustrative embodiment.
FIG. 6 is a schematic flow chart of an information processing method according to an illustrative embodiment.
FIG. 7 is a schematic flow chart of an information processing method according to an illustrative embodiment.
FIG. 8 is a schematic flow chart of an information processing method according to an illustrative embodiment.
FIG. 9a is a schematic flow chart of an information processing method according to an illustrative embodiment.
FIG. 9b is a schematic flow chart of an information processing method according to an illustrative embodiment.
FIG. 10 is a block diagram of an information processing apparatus according to an illustrative embodiment.
FIG. 11 is a block diagram of an information processing apparatus according to an illustrative embodiment.
FIG. 12 is a block diagram of an information processing apparatus according to an illustrative embodiment.
FIG. 13 is a block diagram of an information processing apparatus according to an illustrative embodiment.
FIG. 14 is a block diagram of a communication device according to an illustrative embodiment.

### DETAILED DESCRIPTION

Illustrative embodiments will be described in detail herein, examples of which are illustrated in the accompanying drawings. The following description refers to the accompanying drawings in which the same numbers in different drawings refer to the same or similar elements unless otherwise indicated. The implementations set forth in the following description of illustrative embodiments do not represent all implementations consistent with the embodiments of the present disclosure. They are merely examples of devices and methods consistent with some aspects of the embodiments of the present disclosure as recited in the appended claims.

The terms used in the disclosure are only for the purpose of describing specific embodiments, and are not intended to limit the embodiments of the disclosure. The singular forms of "a", "said" and "the" used in the disclosure and attached claims are also intended to include plural forms, unless the context clearly indicates other meanings. It is understandable that the term "and/or" as used herein refers to and includes any or all possible combinations of one or more associated listed items. Additionally, in this disclosure, a slash (/) or a comma (,) may refer to "and/or". For example, "A/B" can refer to "A and/or B".

It is understandable that terms such as "first", "second" and "third" may be used in the embodiments of the present disclosure for describing various information, these information should not be limited by these terms. These terms are only used for distinguishing information of the same type from others. For example, first information may also be referred to as second information, and similarly, the second information may also be referred to as the first information, without departing from the scope of the embodiments of the present disclosure. As used herein, the term "if" may be construed to mean "when" or "upon" or "in response to determining" depending on the context.

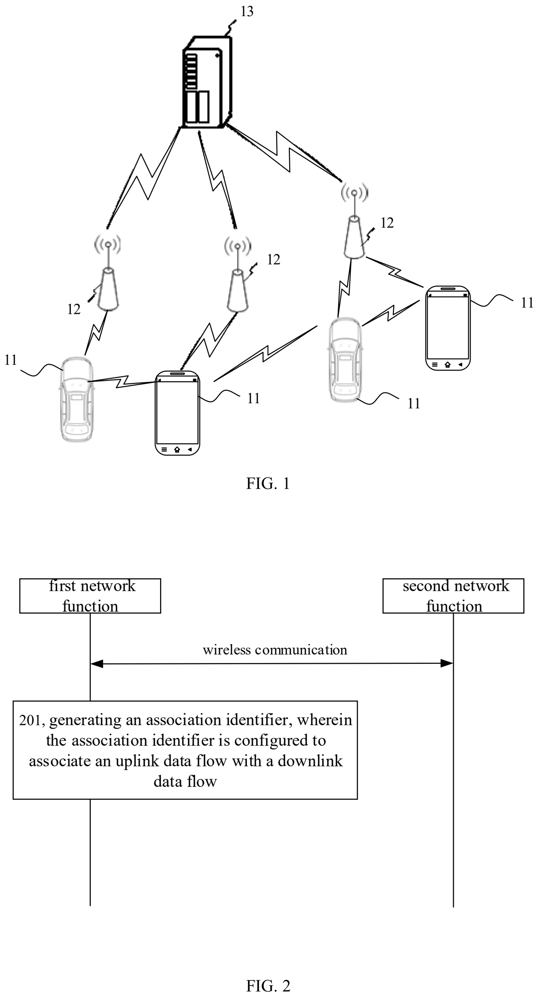

Referring to FIG. 1, FIG. 1 shows a schematic structural diagram of a wireless communication system provided by an embodiment of the present disclosure. As shown in FIG. 1, the wireless communication system is a communication system based on cellular mobile communication technology, and the wireless communication system may include several user equipments 11 and several access network devices 12.

The user equipment 11 may be a device that provides voice and/or data connectivity to a user. The user equipment 11 may communicate with one or more core networks via a radio access network (RAN), and the user equipment 11 may be a terminal in an Internet of Things (IoT), such as a sensor device, a mobile phone (or referred to as a "cellular" phone) and a computer including an IoT terminal device. For example, the user equipment 11 may be a fixed device, a portable device, a pocket device, a hand-held device, a computer built-in device or a vehicle-mounted device. For example, the user equipment 11 may be a station (STA), a subscriber unit, a subscriber station, a mobile station, a mobile, a remote station, an access point, a remote terminal, an access terminal, a user terminal, a user agent, a user device, or a user equipment. Alternatively, the user equipment 11 may also be a wearable device, a virtual reality (VR) device, an augmented reality (AR) device, or a VR/AR hybrid headset. Alternatively, the user equipment 11 may also be a device of an unmanned aerial vehicle. Alternatively, the user equipment 11 may also be a vehicle-mounted device, for example, it may be a trip computer with a wireless communication function, or a wireless communication device connected externally to the trip computer. Alternatively, the user equipment 11 may also be a roadside device, for example, it may be a street lamp, a signal lamp, or other roadside devices with a wireless communication function.

The access network device 12 may be a device for communicating with the user equipment 11 in a wireless communication system. The access network device 12 may be a base station, or an access point, or a network device, or may refer to a device in an access network that communicates with a wireless terminal via one or more sectors on an air interface. The network device may be configured to convert received air frames and IP packets to each other, as a router between the wireless terminal and the remaining portion of the access network. The remaining portion of the access network may include an Internet Protocol (IP) network. The network device may also coordinate attribute management for the air interface. The wireless communication system may be the 4th generation (4G) mobile communication system, also referred to as a long term evolution (LTE) system, or the wireless communication system may be a 5G system, also referred to as a new radio (NR) system or 5G NR system. Alternatively, the wireless communication system may be a next-generation system of the 5G system. An access network in the 5G system is referred to as new generation-radio access network (NG-RAN).

The access network device 12 may be an evolved node B (eNB) in the 4G system. Alternatively, the access network device 12 may be a next-generation node B (gNB) adopting a centralized and distributed architecture in the 5G system. When the access network device 12 adopts the centralized and distributed architecture, it generally includes a central unit (CU) and at least two distributed units (DU). The centralized unit is provided with a protocol stack of a packet data convergence protocol (PDCP) layer, a radio link control (RLC) layer, a media access control (MAC) layer. The distributed unit is provided with a physical (PHY) layer protocol stack. The specific implementation of the access network device 12 is not limited in the embodiments of the present disclosure.

A wireless connection may be established between the access network device 12 and the user equipment 11 through a radio air interface. In different embodiments, the radio air interface is a radio air interface based on the 4th generation (4G) mobile communication network technology standard; or the radio air interface is a radio air interface based on the fifth generation (5G) mobile communication network technology standard, such as a new radio interface; or the radio air interface is a radio air interface based on a next-generation (from 5G) mobile communication network technology standard.

In some embodiments, E2E (End to End) connection or D2D (device to device) connection may also be established between the user equipments 11, such as V2V (vehicle to vehicle) communication, V2I (vehicle to Infrastructure) communication, and V2P (vehicle to pedestrian) communication in vehicle to everything (V2X) communication.

In some embodiments, the wireless communication system may further include a core network device 13. Several access network devices 12 are connected to the core network device 13 respectively.

In some embodiments, the core network device 13 may be a mobility management entity (MME) in an evolved packet core (EPC) network. Alternatively, the core network device may also be a serving gateway (SGW), a public data network gateway (PGW), a policy and charging rule function (PCRF) unit or a home subscriber server (HSS), etc.

In some embodiments, the core network device 13 may be a policy control function (PCF), a user plane function (UPF), a network repository function (NRF), a session management function (SMF), etc.

The PCF, the UPF, etc. in embodiments of the present disclosure may be implemented by one physical device or by a plurality of physical devices. It may be understood that the PCF, the UPF, etc. in the embodiments of the present disclosure may be a logical function module in the physical device or a logical function module composed of the plurality of physical devices, which is not limited in embodiments of the present disclosure.

In order to facilitate the understanding for those skilled in the art, embodiments of the present disclosure include a plurality of implementations to clearly illustrate technical solutions of the embodiments of the present disclosure. Of course, those skilled in the art may understand that a plurality of embodiments provided by the embodiments of the present disclosure may be executed separately, or may be executed together with methods of other embodiments of the present disclosure, or may be executed together with some methods in other related technologies separately or in combination, which are not limited by the embodiments of the present disclosure.

An XRM (Extended Reality Media) service requires the fifth generation cellular mobile communication system (5GS) to comprehensively consider whether QoS (Quality of Service) characteristic parameters of service related data flows can be simultaneously satisfied and coordinated consistently, which relates to consistency guarantee in QoS authorization and enforcement for both the XRM service involves a plurality of XRM data flows within a single a user equipment (UE) and XRM data flows across a plurality of UEs.

Uplink-downlink transmission coordination to meet round-trip latency requirements is a key issue in 5GS XRM service research.

In the related arts, an AF (application function) may provide a PDB (packet delay budget) as latency requirements in case of requesting QoS, or provide a round-trip requirement indication (RT requirement indication) as an indication of whether a round-trip latency needs to be considered, for a network authorization reference.

However, a delay status in an actual service process is affected by various factors in the network and changes dynamically and continuously. Therefore, a real-time or quasi-real-time delay status of the network and real-time delay requirements of the AF service may directly affect QoS authorization of each data flow, and even affect whether the 5GS XRM service function support can be successful. However, the 5GS system currently has no perfect mechanism to support this requirement, and there is no corresponding technical solution to support reasonable QoS authorization for the round-trip latency requirements of XRM service data flows of the PCF.

Before introducing the method provided by the present disclosure in detail, some concepts involved in the present disclosure are briefly introduced first.

A QoS flow: one PDU (packet data unit) session may include one or more QoS flows. In the 5G system, one QoS flow identifier (QFI) is used to identify one QoS flow. User plane data with the same QFI in the PDU session will have the same forwarding process.

A fifth generation quality of service identifier (5G QoS identifier, 5QI), is configured to represent a 5G QoS characteristic of the QoS flow. The 5QI is a scalar configured to index a 5G QoS characteristic. The QoS characteristic may include at least one of: a delay critical guaranteed bit rate (delay critical GBR) data flow, a guaranteed flow bit rate (GFBR), a packet delay budget (PDB), or a default maximum data burst volume (MDBV), etc.

A PDB refers to a delay budget for message transmission between terminal device and anchor user plane network element. In the 5G system, the anchor user plane network element may refer to a UPF that terminates an N6 interface. The PDB may be divided into two parts: AN PDB and CN PDB. The AN PDB refers to an upper limit of a delay for message transmission between terminal device and access network device. The CN PDB refers to an upper limit of a delay for message transmission between access network device and anchor user plane network element. The PDB is equal to a sum of the AN PDB and the CN PDB.

A PSDB (PDU set delay budget): a delay budget for a group of packet data units.

A round-trip latency (or two way delay) refers to a total delay experienced from a time at which a sender sends data to a time at which the sender receives confirmation from a receiver (the receiver sends the confirmation immediately after receiving the data).

An actual latency refers to a latency actually experienced from the time at which the sender sends the data to a time the receiver receives the data.

FIG. 2 is a schematic flow chart of an information processing method according to an illustrative embodiment. As shown in FIG. 2, the information processing method may be performed by a policy control function (PCF), and may include the following step.

At step 201, an association identifier is generated, in which, the association identifier is configured to associate an uplink data flow with a downlink data flow.

In some examples, the first network function may be, for example, a policy control function (PCF).

In another examples, the first network function may be a PCRF or other network function.

In some examples, the association identifier may be a character string obtained according to a predetermined association identifier generation rule.

In some examples, the association identifier may include, but is not limited to, a common identifier (common ID), a peer identifier (peer ID), a round-trip group identifier (round-trip group ID), or a peer indication, etc.

In some examples, the association identifier is configured to associate round-trip uplink data flow and downlink data flow, such as round-trip uplink SDF (service data flow) and downlink SDF, or to associate round-trip uplink QoS flow and downlink QoS flow.

In some examples, the uplink data flow and the downlink data flow may be XR-type service data flows or multimodal data service data flows.

In some examples, the first network function may adjust an uplink latency of the uplink data flow and/or a downlink latency of the downlink data flow according to an actual latency of the uplink data flow and/or an actual latency of the downlink data flow and based on the association identifier.

As an example, the first network function may find the downlink data flow associated with the uplink data flow according to the association identifier, and may adjust the uplink latency of the uplink data flow and/or the downlink latency of the downlink data flow according to the actual latency of the uplink data flow.

For example, in a case where the actual latency of the uplink data flow is less than the uplink latency of the uplink data flow, the uplink latency of the uplink data flow is decreased, and the downlink latency of the downlink data flow is increased.

As another example, the first network function may find the uplink data flow associated with the downlink data flow based on the association identifier, and may adjust the uplink latency of the uplink data flow and/or the downlink latency of the downlink data flow based on the actual latency of the downlink data flow.

For example, in a case where the actual latency of the downlink data flow is less than the downlink latency of the downlink data flow, the downlink latency of the downlink data flow is decreased, and the uplink latency of the uplink data flow is increased.

In some examples, the uplink data flow and the downlink data flow having the same association identifier correspond to an uplink latency and a downlink latency, respectively, and a sum of the uplink latency and the downlink latency is less than or equal to a round-trip latency.

In some examples, the uplink latency corresponding to the uplink data flow is included in an uplink PCC (policy and control charging) rule, and the downlink latency corresponding to the downlink data flow is included in a downlink PCC rule.

In some examples, the uplink data flow identified by the association identifier corresponds to an uplink latency, and the downlink data flow identified by the association identifier corresponds to a downlink latency, a sum of the uplink latency and the downlink latency is less than or equal to the round-trip latency.

According to the information processing method provided by embodiments of the present disclosure, the first network function generates the association identifier configured to associate the uplink data flow with the downlink data flow. Thus, a demand for network transmission of the uplink data flow and/or the downlink data flow can be recognized by using the association identifier, and it may be conducive to improving a service assurance capability and user experience.

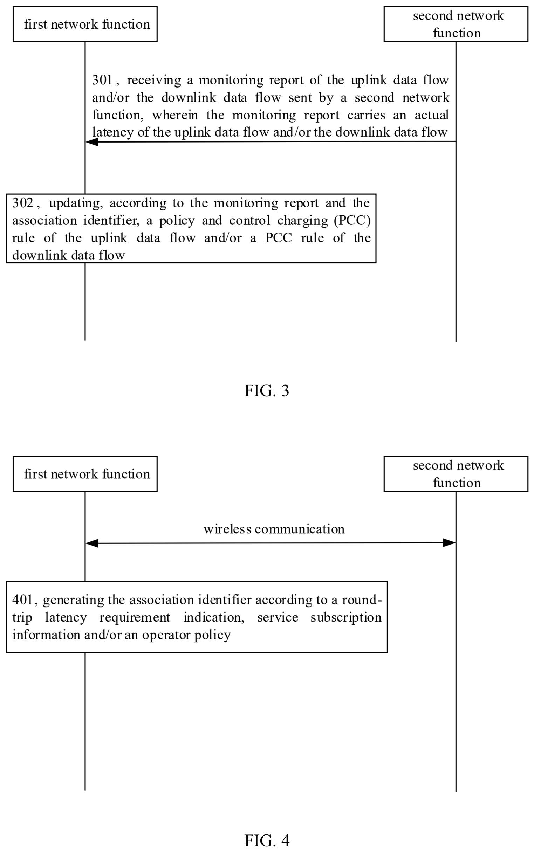

In an embodiment, as shown in FIG. 3, the method may further include the following steps.

At step 301, a monitoring report of the uplink data flow and/or the downlink data flow sent by a second network function is received, in which, the monitoring report carries an actual latency of the uplink data flow and/or the downlink data flow.

At step 302, a policy and control charging (PCC) rule of the uplink data flow and/or a PCC rule of the downlink data flow are updated according to the monitoring report and the association identifier.

In some examples, the second network function may be, for example, a user plane function (UPF).

In some examples, the PCC rule includes at least one of:
a 5G QoS identifier (5QI);
a packet delay budget (PDB); or
a PDU set delay budget (PSDB).

In this embodiment, there may be a transmission latency between the uplink data flow and the downlink data flow that are transmitted between a UE and a second network function (e.g., UPF). The second network function may monitor the actual latency of the uplink data flow, and carry the actual latency of the uplink data flow in an uplink monitoring report (e.g., an uplink QoS monitoring report), and/or monitor the actual latency of the downlink data flow, and carry the actual latency of the downlink data flow in a downlink monitoring report (e.g., a downlink QoS monitoring report).

After receiving the monitoring report of the uplink data flow and/or the downlink data flow sent by the second network function, the first network function may update the PCC rule of the uplink data flow and/or the PCC rule of the downlink data flow according to the actual latency of the uplink data flow and/or the downlink data flow carried in the monitoring report and the association identifier configured to associate the uplink data flow and the downlink data flow.

For example, in a case where the actual latency of the uplink data flow carried in the monitoring report is less than an uplink latency of the uplink data flow, the first network function may, based on the association identifier configured to associate the uplink data flow and the downlink data flow, find the PCC rule of the downlink data flow, and adjust the PCC rule of the downlink data flow (i.e., a downlink PCC rule) and the PCC rule of the uplink data flow (i.e., an uplink PCC rule), for example, increase a PDB and/or a PSDB in the PCC rule of the downlink data flow, and decrease a PDB and/or a PSDB in the PCC rule of the uplink data flow, and for another example, assign a corresponding 5QI to an updated PDB in the PCC rule of the uplink data flow and/or the PCC rule of the downlink data flow.

For another example, in a case where the actual latency of the downlink data flow carried in the monitoring report is less than the downlink latency of the downlink data flow, the first network function may, based on the association identifier configured to associate the uplink data flow and the downlink data flow, find the PCC rule of the uplink data flow, and adjust the PCC rule of the uplink data flow and the PCC rule of the downlink data flow, for example, increase the PDB and/or the PSDB in the PCC rule of the uplink data flow, and decrease the PDB and/or the PSDB in the PCC rule of the downlink data flow, for another example, assign a corresponding 5QI to the updated PDB in the PCC rule of the uplink data flow and/or the PCC rule of the downlink data flow.

In some examples, the actual latency of the uplink data flow may be a statistical value (e.g., an average value) of actual latencies of uplink data flows transmitted multiple times. The actual latency of the downlink data flow may be a statistical value (e.g., an average value) of actual latencies of downlink data flows transmitted multiple times.

In an embodiment of the present disclosure, the first network function may update the PCC rule of the uplink data flow and/or the PCC rule of the downlink data flow according to the actual latency of the uplink data flow and/or the downlink data flow carried in the monitoring report and by using the association identifier, capable of better supporting uplink and downlink data transmission and improving a service assurance capability and user experience.

In an embodiment, the method further includes:
receiving an update indication sent by a third network function according to a monitoring report carrying an actual latency of the uplink data flow and/or the downlink data flow, in which, the monitoring report is forwarded by the second network function to the third network function via a fourth network function; and
updating, according to the update indication and the association identifier, the PCC rule of the uplink data flow and/or the PCC rule of the downlink data flow.

In some examples, the monitoring report carrying the actual latency of the uplink data flow and/or the downlink data flow may be forwarded by the second network function (e.g., UPF) to the third network function (e.g., AF) via the fourth network function (e.g., NEF).

For example, in a case where the second network function reports an uplink QoS monitoring report (UL QoS monitoring report) to the third network function via the fourth network function, the fourth network function may obtain the association identifier or association SDF information from the first network function, and the fourth network function obtains a downlink QoS monitoring report (DL QoS monitoring report) associating with an SDF from the second network function based on the association identifier or the association SDF information.

In an embodiment, the actual latency carried in the monitoring report includes at least one of:
a PDB; or
a PSDB.

In some examples, the actual latency of the uplink data flow carried in the monitoring report includes an uplink PDB and/or an uplink PSDB measured for the uplink data flow. The actual latency of the downlink data flow carried in the monitoring report includes a downlink PDB and/or a downlink PSDB measured for the downlink data flow.

In an embodiment, as shown in FIG. 4, in the above step 201, generating the association identifier may include the following steps.

At step 401, the association identifier is generated according to a round-trip latency requirement indication, service subscription information and/or an operator policy.

In some examples, the round-trip latency requirement indication is configured to indicate whether a round-trip latency needs to be considered, and the round-trip latency may be carried in a round-trip latency requirement in a case where the round-trip latency requirement indication indicates that the round-trip latency needs to be considered.

The first network function may divide the round-trip latency into an uplink latency (e.g., an uplink PDB or an uplink PSDB) and a downlink latency (e.g., a downlink PDB or a downlink PSDB) according to the round-trip latency requirement. The uplink latency may not be equal to the downlink latency, but a sum of the uplink latency and the downlink latency may not exceed a round-trip latency.

For example, the first network function may generate the association identifier configured to associate the uplink data flow with the downlink data flow in a case where the round-trip latency requirement indicates that the round-trip latency needs to be considered.

For another example, the first network function may generate the association identifier configured to associate the uplink data flow with the downlink data flow in a case where the service subscription information and/or the operator policy support an update of a PCC rule for the round-trip latency.

For another example, the first network function may generate the association identifier configured to associate the uplink data flow with the downlink data flow in a case where the round-trip latency requirement indicates that the round-trip latency needs to be considered and the service subscription information and/or the operator policy support the update of the PCC rule for the round-trip latency.

In an embodiment, there is provided an information processing method, performed by a first network function. The information processing method may include:
receiving a monitoring report of the uplink data flow and/or the downlink data flow sent by a second network function, in which, the monitoring report carries an actual latency of the uplink data flow and/or the downlink data flow;
updating, according to the monitoring report and the association identifier, a PCC rule of the uplink data flow and/or a PCC rule of the downlink data flow, in which, the association identifier is configured to associate the uplink data flow with the downlink data flow.

In an embodiment, updating, according to the monitoring report and the association identifier, the PCC rule of the uplink data flow and/or the PCC rule of the downlink data flow may include:
sending the monitoring report to a third network function;
receiving an update indication sent by the third network function according to the monitoring report; and
updating, according to the update indication and the association identifier, the PCC rule of the uplink data flow and/or the PCC rule of the downlink data flow.

In some examples, the third network function may be, for example, an AF (application function).

The AF refers to various services at an application layer. The AF may be an operator-internal AF such as Volte (voice over long-term evolution), or may be a third-party AF (for example, a video server, a game server, etc.). In a case where the AF is the operator-internal AF, and is within a trusted domain with other NFs (network functions), the AF may directly interact and access with other NFs such as a PCF. However, the third-party AF is not within the trusted domain and may access other NFs via an NEF (network exposure function).

The third network function may determine the actual latency of the uplink data flow and/or the downlink data flow based on the received monitoring report, and send the update indication to the first network function based on statistical information of the actual latency of the uplink data flow and/or the downlink data flow.

The update indication is configured to indicate to update the PCC rule of the uplink data flow and/or the PCC rule of the downlink data flow.

For example, the update indication carries statistical information of the actual latency of the uplink data flow and/or statistical information of the PCC rule of the downlink data flow.

Here, the statistical information of the actual latency of the uplink data flow may be an average value of actual latencies of uplink data flows transmitted multiple times.

Here, the statistical information of the actual latency of the downlink data flow may be an average value of actual latencies of downlink data flows transmitted multiple times.

In an embodiment, updating, according to the monitoring report and the association identifier, the PCC rule of the uplink data flow and/or the PCC rule of the downlink data flow includes:
determining, according to the monitoring report, whether to update the PCC rule of the uplink data flow and/or the PCC rule of the downlink data flow; and
in a case of determining to update the PCC rule of the uplink data flow and/or the PCC rule of the downlink data flow, updating, according to the monitoring report and the association identifier, the PCC rule of the uplink data flow and/or the PCC rule of the downlink data flow.

In this embodiment, the first network function may compare the actual latency of the uplink data flow carried in the monitoring report with the uplink latency of the uplink data flow, and determine whether to update the PCC rule of the uplink data flow and/or the PCC rule of the downlink data flow according to a comparing result; and/or, compare the actual latency of the downlink data flow carried in the monitoring report with the downlink latency of the downlink data flow, and determine whether to update the PCC rule of the uplink data flow and/or the PCC rule of the downlink data flow according to a comparing result.

For example, the first network function may determine to update the PCC rule of the uplink data flow and/or the PCC rule of the downlink data flow in a case where the actual latency of the uplink data flow is less than the uplink latency of the uplink data flow, and/or the actual latency of the downlink data flow is less than the downlink latency of the downlink data flow.

In an embodiment, there is provided an information processing method, performed by a first network function. The information processing method may include:
generating the association identifier according to a round-trip latency requirement indication, service subscription information and/or an operator policy, in which, the association identifier is configured to associate an uplink data flow with a downlink data flow.

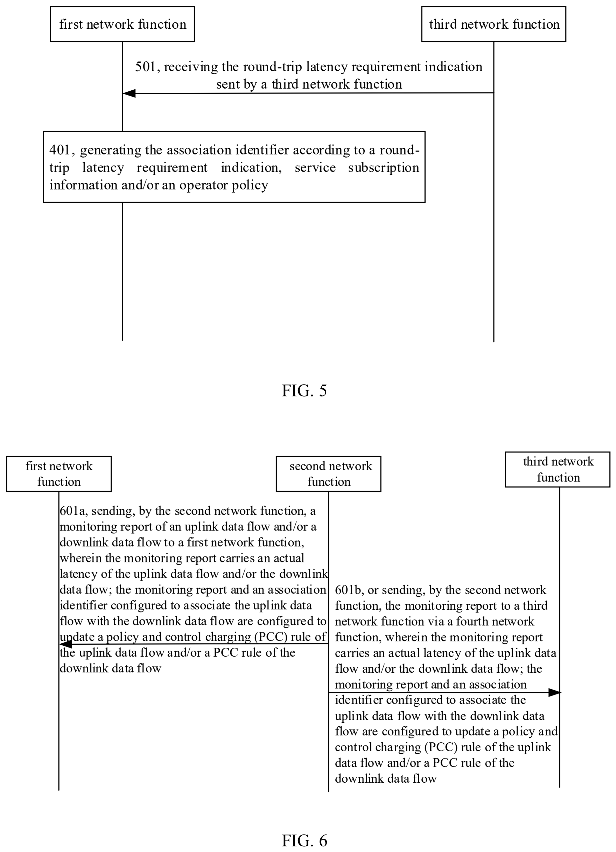

In an embodiment, as shown in FIG. 5, based on FIG. 4, the method further includes the following step.

At step 501, the round-trip latency requirement indication sent by a third network function is received.

In this embodiment, the first network function may receive the round-trip latency requirement indication directly or indirectly sent by the third network function.

For example, in a case where the third network function is a trusted network function (e. g., a trusted AF), the first network function may receive the round-trip latency requirement indication directly sent by the third network function.

For example, in a case where the third network function is an untrusted network function (e. g., an untrusted AF), the first network function may receive the round-trip latency requirement indication indirectly sent by the third network function.

In an embodiment, in the above step 501, receiving the round-trip latency requirement indication sent by the third network function includes:
receiving the round-trip latency requirement indication directly sent by the third network function; or
receiving the round-trip latency requirement indication forwarded by a fourth network function which is from the third network function; or
receiving the round-trip latency requirement indication forwarded by a fifth network function which is from the third network function; or
receiving the round-trip latency requirement indication forwarded by the fifth network function via the fourth network function which is from the third network function.

In some examples, the fourth network function may be, for example, an NEF (network exposure function).

In some examples, the fifth network function may be, for example, a TSCTSF (time sensitive communication time synchronization function).

In an embodiment, receiving the round-trip latency requirement indication sent by the third network function includes:
during a session creation procedure initiated by the third network function, receiving the round-trip latency requirement indication sent by the third network function; or
during a session update procedure initiated by the third network function, receiving the round-trip latency requirement indication sent by the third network function; or
during a service parameter provisioning procedure, receiving the round-trip latency requirement indication sent by the third network function; or
during a procedure for setting a policy for a session initiated by the third network function, receiving the round-trip latency requirement indication sent by the third network function.

In some examples, in a case where the third network function is the AF, the session initiated by the third network function is an AF session.

In this embodiment, the third network function may provide the round-trip latency requirement indication to the first network function, such that the first network function may determine the uplink latency of the uplink data flow and/or the downlink latency of the downlink data flow according to the round-trip latency requirement indication.

In an embodiment, the method may further include:
locally storing the association identifier; or
storing the association identifier in a unified data repository (UDR) and/or an unstructured data storage function (UDSF).

In this embodiment, after storing the association identifier, the first network function may use the stored association identifier to find the uplink data flow and/or the downlink data flow identified by the association identifier, and update the PCC rule of the uplink data flow and/or the PCC rule of the downlink data flow identified by the association identifier.

FIG. 6 is a schematic flow chart of an information processing method according to an illustrative embodiment. As shown in FIG. 6, the information processing method may be performed by a second network function, and may include one of the following steps.

At step 601a, the second network function sends a monitoring report of an uplink data flow and/or a downlink data flow to a first network function, in which, the monitoring report carries an actual latency of the uplink data flow and/or the downlink data flow, the monitoring report and an association identifier configured to associate the uplink data flow with the downlink data flow are configured to update a PCC rule of the uplink data flow and/or a PCC rule of the downlink data flow.

At step 601b, the second network function sends the monitoring report to a third network function via a fourth network function, in which, the monitoring report carries an actual latency of the uplink data flow and/or the downlink data flow, the monitoring report and an association identifier configured to associate the uplink data flow with the downlink data flow are configured to update a PCC rule of the uplink data flow and/or a PCC rule of the downlink data flow.

In some examples, the second network function may be, for example, a user plane function (UPF).

In some examples, the first network function may be, for example, a PCF.

In some examples, the third network function may be, for example, an AF.

In some examples, the fourth network function may be, for example, an NEF.

In some examples, the association identifier may be a character string obtained according to a predetermined association identifier generation rule.

In some examples, the association identifier may include, but is not limited to, a common identifier (common ID), a peer identifier (peer ID), a round-trip group identifier (round-trip group ID), or a peer indication, etc.

In some examples, the association identifier is configured to associate round-trip uplink data flow and downlink data flow, such as round-trip uplink SDF (service data flow) and downlink SDF, or to associate round-trip uplink QoS flow and downlink QoS flow.

In some examples, the uplink data flow and the downlink data flow may be XR-type service data flows or multimodal data service data flows.

In some examples, the monitoring report carrying the actual latency of the uplink data flow and/or the downlink data flow may be forwarded by the second network function (e.g., UPF) to the third network function (e.g., AF) via the fourth network function (e.g., NEF).

For example, in a case where the second network function reports an uplink QoS monitoring report (UL QoS monitoring report) to the third network function via the fourth network function, the fourth network function may obtain the association identifier or association SDF information from the first network function, and the fourth network function obtains a downlink QoS monitoring report (DL QoS monitoring report) associating with an SDF from the second network function based on the association identifier or the association SDF information.

In an embodiment, the actual latency carried in the monitoring report includes at least one of:
a PDB; or
a PSDB.

In some examples, the actual latency of the uplink data flow carried in the monitoring report includes an uplink PDB and/or an uplink PSDB measured for the uplink data flow. The actual latency of the downlink data flow carried in the monitoring report includes a downlink PDB and/or a downlink PSDB measured for the downlink data flow.

In some examples, the PCC rule includes at least one of:
a 5G QoS identifier (5QI);
a packet delay budget (PDB); or
a PDU set delay budget (PSDB).

In some examples, the uplink data flow identified by the association identifier corresponds to an uplink latency, and the downlink data flow identified by the association identifier corresponds to a downlink latency, a sum of the uplink latency and the downlink latency is less than or equal to a round-trip latency.

In this embodiment, there may be a transmission latency between the uplink data flow and the downlink data flow that are transmitted between a UE and a second network function (e.g., UPF). The second network function may monitor the actual latency of the uplink data flow, and carry the actual latency of the uplink data flow in an uplink monitoring report (e.g., an uplink QoS monitoring report), and/or monitor the actual latency of the downlink data flow, and carry the actual latency of the downlink data flow in a downlink monitoring report (e.g., a downlink QoS monitoring report).

After receiving the monitoring report of the uplink data flow and/or the downlink data flow sent by the second network function, the first network function may update the PCC rule of the uplink data flow and/or the PCC rule of the downlink data flow according to the actual latency of the uplink data flow and/or the downlink data flow carried in the monitoring report and the association identifier configured to associate the uplink data flow and the downlink data flow.

In the present disclosure, the actual latency of the uplink data flow may be a statistical value (e.g., an average value) of actual latencies of uplink data flows transmitted multiple times. The actual latency of the downlink data flow may be a statistical value (e.g., an average value) of actual latencies of downlink data flows transmitted multiple times.

For example, in a case where the actual latency of the uplink data flow carried in the monitoring report is less than an uplink latency of the uplink data flow, the first network function may, based on the association identifier configured to associate the uplink data flow and the downlink data flow, find the PCC rule of the downlink data flow, and adjust the PCC rule of the downlink data flow (i.e., a downlink PCC rule) and the PCC rule of the uplink data flow (i.e., an uplink PCC rule), for example, increase a PDB and/or a PSDB in the PCC rule of the downlink data flow, and decrease a PDB and/or a PSDB in the PCC rule of the uplink data flow, and for another example, assign a corresponding 5QI to an updated PDB in the PCC rule of the uplink data flow and/or the PCC rule of the downlink data flow.

For another example, in a case where the actual latency of the downlink data flow carried in the monitoring report is less than the downlink latency of the downlink data flow, the first network function may, based on the association identifier configured to associate the uplink data flow and the downlink data flow, find the PCC rule of the uplink data flow, and adjust the PCC rule of the uplink data flow and the PCC rule of the downlink data flow, for example, increase the PDB and/or the PSDB in the PCC rule of the uplink data flow, and decrease the PDB and/or the PSDB in the PCC rule of the downlink data flow, for another example, assign a corresponding 5QI to the updated PDB in the PCC rule of the uplink data flow and/or the PCC rule of the downlink data flow.

In an embodiment of the present disclosure, the second network function sends the monitoring report of the uplink data flow and/or the downlink data flow to the first network function, such that the first network function may update the PCC rule of the uplink data flow and/or the PCC rule of the downlink data flow according to the actual latency of the uplink data flow and/or the downlink data flow carried in the monitoring report and by using the association identifier, capable of better supporting uplink and downlink data transmission and improving a service assurance capability and user experience.

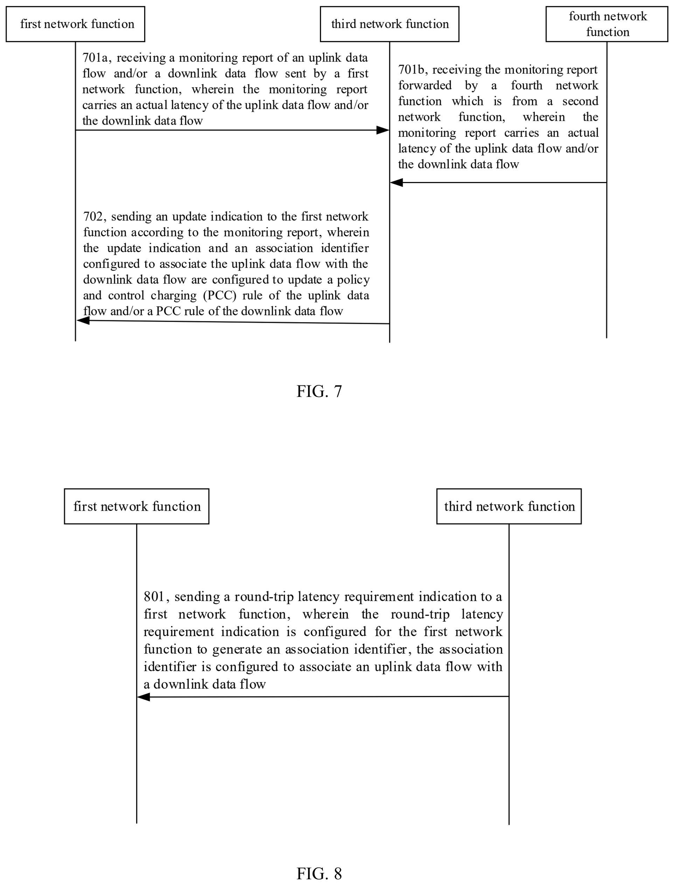

FIG. 7 is a schematic flow chart of an information processing method according to an illustrative embodiment. As shown in FIG. 7, the information processing method may be performed by a third network function, and may include one of steps 701a and 701b, and a step 702.

At step 701a, a monitoring report of an uplink data flow and/or a downlink data flow sent by a first network function is received, in which, the monitoring report carries an actual latency of the uplink data flow and/or the downlink data flow.

At step 701b, the monitoring report forwarded by a fourth network function which is from a second network function is received, in which, the monitoring report carries an actual latency of the uplink data flow and/or the downlink data flow.

At step 702, an update indication is sent to the first network function according to the monitoring report, in which, the update indication and an association identifier configured to associate the uplink data flow with the downlink data flow are configured to update a PCC rule of the uplink data flow and/or a PCC rule of the downlink data flow.

In some examples, the third network function may be, for example, an AF.

The AF refers to various services at an application layer. The AF may be an operator-internal AF such as Volte (voice over long-term evolution), or may be a third-party AF (for example, a video server, a game server, etc.). In a case where the AF is the operator-internal AF, and is within a trusted domain with other NFs, the AF may directly interact and access with other NFs such as a PCF. However, the third-party AF is not within the trusted domain and may access other NFs via an NEF.

In some examples, the first network function may be, for example, a PCF.

In some examples, the association identifier may be a character string obtained according to a predetermined association identifier generation rule.

In some examples, the association identifier may include, but is not limited to, a common identifier (common ID), a peer identifier (peer ID), a round-trip group identifier (round-trip group ID), or a peer indication, etc.

In some examples, the association identifier is configured to associate round-trip uplink data flow and downlink data flow, such as round-trip uplink SDF (service data flow) and downlink SDF, or to associate round-trip uplink QoS flow and downlink QoS flow.

In some examples, the uplink data flow and the downlink data flow may be XR-type service data flows or multimodal data service data flows.

The third network function may determine the actual latency of the uplink data flow and/or the downlink data flow based on the received monitoring report, and send the update indication to the first network function based on statistical information of the actual latency of the uplink data flow and/or the downlink data flow.

The update indication is configured to indicate to update the PCC rule of the uplink data flow and/or the PCC rule of the downlink data flow.

For example, the update indication carries statistical information of the actual latency of the uplink data flow and/or statistical information of the PCC rule of the downlink data flow.

Here, the statistical information of the actual latency of the uplink data flow may be an average value of actual latencies of uplink data flows transmitted multiple times.

Here, the statistical information of the actual latency of the downlink data flow may be an average value of actual latencies of downlink data flows transmitted multiple times.

In an embodiment of the present disclosure, the third network function may receive the monitoring report of the uplink data flow and/or the downlink data flow sent by the first network function, and send the update indication to the first network function based on the monitoring report, such that the first network function may update the PCC rule of the uplink data flow and/or the PCC rule of the downlink data flow based on the update indication and the association identifier configured to associate the uplink data flow with the downlink data flow, thereby better supporting uplink and downlink data transmission and improving service assurance capabilities and user experience, capable of better supporting uplink and downlink data transmission and improving a service assurance capability and user experience.

In an embodiment, the third network function may receive the monitoring report of the uplink data flow and/or the downlink data flow forwarded by the second network function via the fourth network function, and send the update indication to the first network function based on the monitoring report.

In some examples, the monitoring report carrying the actual latency of the uplink data flow and/or the downlink data flow may be forwarded by the second network function (e.g., UPF) to the third network function (e.g., AF) via the fourth network function (e.g., NEF).

For example, in a case where the second network function reports an uplink QoS monitoring report (UL QoS monitoring report) to the third network function via the fourth network function, the fourth network function may obtain the association identifier or association SDF information from the first network function, and the fourth network function obtains a downlink QoS monitoring report (DL QoS monitoring report) associating with an SDF from the second network function based on the association identifier or the association SDF information.

In an embodiment, the actual latency carried in the monitoring report includes at least one of:
a PDB; or
a PSDB.

In some examples, the actual latency of the uplink data flow carried in the monitoring report includes an uplink PDB and/or an uplink PSDB measured for the uplink data flow. The actual latency of the downlink data flow carried in the monitoring report includes a downlink PDB and/or a downlink PSDB measured for the downlink data flow.

In some examples, the PCC rule includes at least one of:
a 5G QoS identifier (5QI);
a packet delay budget (PDB); or
a PDU set delay budget (PSDB).

In an embodiment, the method may further include:
sending a round-trip latency requirement indication to the first network function, in which, the round-trip latency requirement indication is configured for the first network function to generate the association identifier.

In this embodiment, the third network function may directly or indirectly send the round-trip latency requirement indication to the first network function.

For example, in a case where the third network function is a trusted network function (e. g., a trusted AF), the third network function may directly send the round-trip latency requirement indication to the first network function.

For example, in a case where the third network function is an untrusted network function (e. g., an untrusted AF), the third network function may indirectly send the round-trip latency requirement indication to the first network function.

In an embodiment, sending the round-trip latency requirement indication to the first network function includes:
directly sending the round-trip latency requirement indication to the first network function; or
forwarding the round-trip latency requirement indication to the first network function via a fourth network function; or
forwarding the round-trip latency requirement indication to the first network function via a fifth network function device; or
forwarding the round-trip latency requirement indication to the fourth network function via the fifth network function, in which, the round-trip latency requirement indication is configured to be provided for the fourth network function to forward to the first network function.

In some examples, the fourth network function may be, for example, an NEF.

In some examples, the fifth network function may be, for example, a TSCTSF.

In an embodiment, sending the round-trip latency requirement indication to the first network function includes:
during a session creation procedure initiated by the third network function, sending the round-trip latency requirement indication to the first network function; or
during an application function (AF) session update procedure initiated by the third network function, sending the round-trip latency requirement indication to the first network function; or
during a service parameter provisioning procedure, sending the round-trip latency requirement indication to the first network function; or
during a procedure for setting a policy for a session initiated by the third network function, sending the round-trip latency requirement indication to the first network function.

In some examples, in a case where the third network function is the AF, the session initiated by the third network function is an AF session.

In this embodiment, the third network function may provide the round-trip latency requirement indication to the first network function, such that the first network function may determine the uplink latency of the uplink data flow and/or the downlink latency of the downlink data flow according to the round-trip latency requirement indication.

In an embodiment, the uplink data flow identified by the association identifier corresponds to an uplink latency, and the downlink data flow identified by the association identifier corresponds to a downlink latency, a sum of the uplink latency and the downlink latency is less than or equal to a round-trip latency.

FIG. 8 is a schematic flow chart of an information processing method according to an illustrative embodiment. As shown in FIG. 8, the information processing method may be performed by a third network function, and may include the following step.

At step 801, a round-trip latency requirement indication is sent to a first network function, in which, the round-trip latency requirement indication is configured for the first network function to generate an association identifier, the association identifier is configured to associate an uplink data flow with a downlink data flow.

In some examples, the third network function may be, for example, an AF.

The AF refers to various services at an application layer. The AF may be an operator-internal AF such as Volte (voice over long-term evolution), or may be a third-party AF (for example, a video server, a game server, etc.). In a case where the AF is the operator-internal AF, and is within a trusted domain with other NFs, the AF may directly interact and access with other NFs such as a PCF. However, the third-party AF is not within the trusted domain and may access other NFs via an NEF.

In some examples, the first network function may be, for example, a PCF.

In some examples, the association identifier may be a character string obtained according to a predetermined association identifier generation rule.

In some examples, the association identifier may include, but is not limited to, a common identifier (common ID), a peer identifier (peer ID), a round-trip group identifier (round-trip group ID), or a peer indication, etc.

In some examples, the association identifier is configured to associate round-trip uplink data flow and downlink data flow, such as round-trip uplink SDF (service data flow) and downlink SDF, or to associate round-trip uplink QoS flow and downlink QoS flow.

In some examples, the uplink data flow and the downlink data flow may be XR-type service data flows or multimodal data service data flows.

In this embodiment, the third network function may directly or indirectly send the round-trip latency requirement indication to the first network function.

For example, in a case where the third network function is a trusted network function (e. g., a trusted AF), the third network function may directly send the round-trip latency requirement indication to the first network function.

For example, in a case where the third network function is an untrusted network function (e. g., an untrusted AF), the third network function may indirectly send the round-trip latency requirement indication to the first network function.

In an embodiment of the present disclosure, the third network function may send the round-trip latency requirement indication to the first network function, such that the first network function may generate the association identifier configured to associate the uplink data flow with the downlink data flow. Thus, a demand for network transmission of the uplink data flow and/or the downlink data flow can be recognized by using the association identifier, and it may be conducive to improving a service assurance capability and user experience.

In an embodiment, in the above step 801, sending the round-trip latency requirement indication to the first network function includes:
directly sending the round-trip latency requirement indication to the first network function; or
forwarding the round-trip latency requirement indication to the first network function via a fourth network function; or
forwarding the round-trip latency requirement indication to the first network function via a fifth network function device; or
forwarding the round-trip latency requirement indication to the fourth network function via the fifth network function, in which, the round-trip latency requirement indication is configured to be provided for the fourth network function to forward to the first network function.

In some examples, the fourth network function may be, for example, an NEF.

In some examples, the fifth network function may be, for example, a TSCTSF.

In an embodiment, in the above step 801, sending the round-trip latency requirement indication to the first network function includes:
during a session creation procedure initiated by the third network function, sending the round-trip latency requirement indication to the first network function; or
during an application function (AF) session update procedure initiated by the third network function, sending the round-trip latency requirement indication to the first network function; or
during a service parameter provisioning procedure, sending the round-trip latency requirement indication to the first network function; or
during a procedure for setting a policy for a session initiated by the third network function, sending the round-trip latency requirement indication to the first network function.

In some examples, in a case where the third network function is the AF, the session initiated by the third network function is an AF session.

In this embodiment, the third network function may provide the round-trip latency requirement indication to the first network function, such that the first network function may determine the uplink latency of the uplink data flow and/or the downlink latency of the downlink data flow according to the round-trip latency requirement indication.

In an embodiment, the method may further include:
receiving a monitoring report of the uplink data flow and/or the downlink data flow sent by the first network function or the monitoring report forwarded by a fourth network function which is from a second network function, in which, the monitoring report carries an actual latency of the uplink data flow and/or the downlink data flow; and
sending an update indication to the first network function according to the monitoring report, in which, the update indication and the association identifier configured to associate the uplink data flow with the downlink data flow are configured to update a PCC rule of the uplink data flow and/or a PCC rule of the downlink data flow.

In some examples, the PCC rule includes at least one of:
a 5G QoS identifier (5QI);
a packet delay budget (PDB); or
a PDU set delay budget (PSDB).

In an embodiment, the third network function may receive the monitoring report of the uplink data flow and/or the downlink data flow forwarded by the second network function via the fourth network function, and send the update indication to the first network function based on the monitoring report.

In some examples, the monitoring report carrying the actual latency of the uplink data flow and/or the downlink data flow may be forwarded by the second network function (e.g., UPF) to the third network function (e.g., AF) via the fourth network function (e.g., NEF).

For example, in a case where the second network function reports an uplink QoS monitoring report (UL QoS monitoring report) to the third network function via the fourth network function, the fourth network function may obtain the association identifier or association SDF information from the first network function, and the fourth network function obtains a downlink QoS monitoring report (DL QoS monitoring report) associating with an SDF from the second network function based on the association identifier or the association SDF information.

In an embodiment, the actual latency carried in the monitoring report includes at least one of:
a PDB; or
a PSDB.

In some examples, the actual latency of the uplink data flow carried in the monitoring report includes an uplink PDB and/or an uplink PSDB measured for the uplink data flow. The actual latency of the downlink data flow carried in the monitoring report includes a downlink PDB and/or a downlink PSDB measured for the downlink data flow.

In an embodiment, the uplink data flow identified by the association identifier corresponds to an uplink latency, and the downlink data flow identified by the association identifier corresponds to a downlink latency, a sum of the uplink latency and the downlink latency is less than or equal to a round-trip latency.

An embodiment of the present disclosure provides an information processing method, which is performed by a fourth network function. The method includes:
forwarding a monitoring report from a second network function to a third network function, in which, the monitoring report carries an actual latency of an uplink data flow and/or a downlink data flow, and the monitoring report is configured to update a PCC rule of the uplink data flow and/or a PCC rule of the downlink data flow.

An embodiment of the present disclosure provides an information processing method, which is performed by a fourth network function. The method includes:
forwarding a monitoring report from a second network function to a third network function, in which, the monitoring report carries an actual latency of an uplink data flow and/or a downlink data flow, and the monitoring report and an association identifier configured to associate the uplink data flow with the downlink data flow are configured to update a PCC rule of the uplink data flow and/or a PCC rule of the downlink data flow.

In some examples, the monitoring report carrying the actual latency of the uplink data flow and/or the downlink data flow may be forwarded by the second network function (e.g., UPF) to the third network function (e.g., AF) via the fourth network function (e.g., NEF).

For example, in a case where the second network function reports an uplink QoS monitoring report (UL QoS monitoring report) to the third network function via the fourth network function, the fourth network function may obtain the association identifier or association SDF information from the first network function, and the fourth network function obtains a downlink QoS monitoring report (DL QoS monitoring report) associating with an SDF from the second network function based on the association identifier or the association SDF information.

In some examples, the PCC rule includes at least one of:
a 5G QoS identifier (5QI);
a packet delay budget (PDB); or
a PDU set delay budget (PSDB).

In an embodiment, the actual latency carried in the monitoring report includes at least one of:
a PDB; or
a PSDB.

In some examples, the actual latency of the uplink data flow carried in the monitoring report includes an uplink PDB and/or an uplink PSDB measured for the uplink data flow. The actual latency of the downlink data flow carried in the monitoring report includes a downlink PDB and/or a downlink PSDB measured for the downlink data flow.

In order to further explain any embodiment of the present disclosure, several specific embodiments are provided below.

Embodiments of the present disclosure provide an information processing method, capable of achieve a latency offset between an uplink latency and a downlink latency, to support XRM services.

Embodiments of the present disclosure provide an information processing method. The method includes:
adding a round-trip (RT) association identifier for an uplink data flow and a downlink data flow of an XRM service.

In some examples, the association identifier may be, for example, a common identifier (common ID), a peer identifier (peer ID), a round-trip group identifier (round-trip group ID) or a peer indication, etc. The association identifier is configured to associate round-trip uplink SDF (service data flow) and downlink SDF, or to associate round-trip uplink QoS flow and downlink QoS flow.

In some examples, the PCF splits an RT latency into UL PDB and DL PDB based on an RT latency requirement.

The UL PDB and the DL PDB can be unequal, but a sum of the UL PDB and the DL PDB does not exceed the RT latency.

The PCF decides to generate the association identifier, and the association identifier is configured to associate an uplink SDF/QoS flow/PCC rule/5QI (PDB) with a downlink SDF/QoS flow/PCC rule/5QI (PDB).

The PCF may adjust the UL PDB and the DL PDB based on a QoS monitoring report and the common ID/peer ID/round-trip group ID/peer indication. For example, after the PCF receives an UL QoS monitoring report, a DL PCC rule may be identified based on the peer ID/round-trip group ID/ peer indication, the PCF may adjust the DL PCC rule with the UL PCC rule together.

That is, the PCF may adjust the UL PCC rule and/or the DL PCC rule (for example, UL PDB and/or DL PDB, UL 5QI and/or DL 5QI) based on the QoS monitoring report and the association identifier. For example, when receiving an UL QoS monitoring report, the PCF may find the DL PCC rule based on the association identifier. The PCF may adjust the UL PCC rule with the DL PCC rule (for example, UL PDB and/or DL PDB, UL 5QI and/or DL 5QI) together.

In some examples, the PCF decides to generate the association identifier based on an RT latency requirement indication, XRM service subscription information and/or an operator policy.

For example, the RT latency requirement indication, service subscription or the operator policy supports an update for a rule or 5QI for the RT latency, then the association identifier is generated to identify the uplink and downlink SDF/QoS flow/PCC rule/5QI (PDB).

In some examples, the PCF adjusts the uplink PCC rule and/or the downlink PCC rule (e.g., uplink PDB and/or downlink PDB, uplink 5QI and/or downlink 5QI) based on the QoS monitoring report and the association identifier, which may directly trigger a PCC rule update for the PCF. Or, the PCF notifies the QoS monitoring report to the AF, providing for the AF to trigger the PCC rule update.

In some examples, the PCF directly or indirectly triggers the PCC rule update, which may include updating a corresponding PDB, or assigning a corresponding 5QI for an updated PDB.

In some examples, the AF provides round-trip latency requirement information to the PCF.

The AF may provide the round-trip latency requirement information to the PCF through one of the following procedures.

The AF provides the round-trip latency requirement to the PCF during an AF session with required QoS creation procedure.

The AF provides the round-trip latency requirement to the PCF during an AF session with required QoS update procedure.

The AF provides the round-trip latency requirement to the PCF during a service specific parameter provisioning procedure.

The AF provides the round-trip latency requirement to the PCF during a procedure for setting a policy for an AF session.

The AF provides the round-trip latency requirement information to the PCF, which may directly send the round-trip latency requirement information to the PCF or indirectly send the round-trip latency requirement information to the PCF. Indirectly sending includes: 1) sending to the PCF through an NEF, 2) or sending to the PCF through a TSCTSF, 3) or sending to the PCF through the TSCTSF and the NEF.

An embodiment of the present disclosure provides an information processing method. The AF provides the RT latency requirement information to the PCF during the AF session with required QoS creation procedure. The PCF decides to generate an association identifier based on the RT latency requirement indication, and/or the XRM service subscription information and/or the operator policy, and the association identifier is configured to identify the uplink and downlink SDF/QoS flow/PCC rule/5QI (PDB).

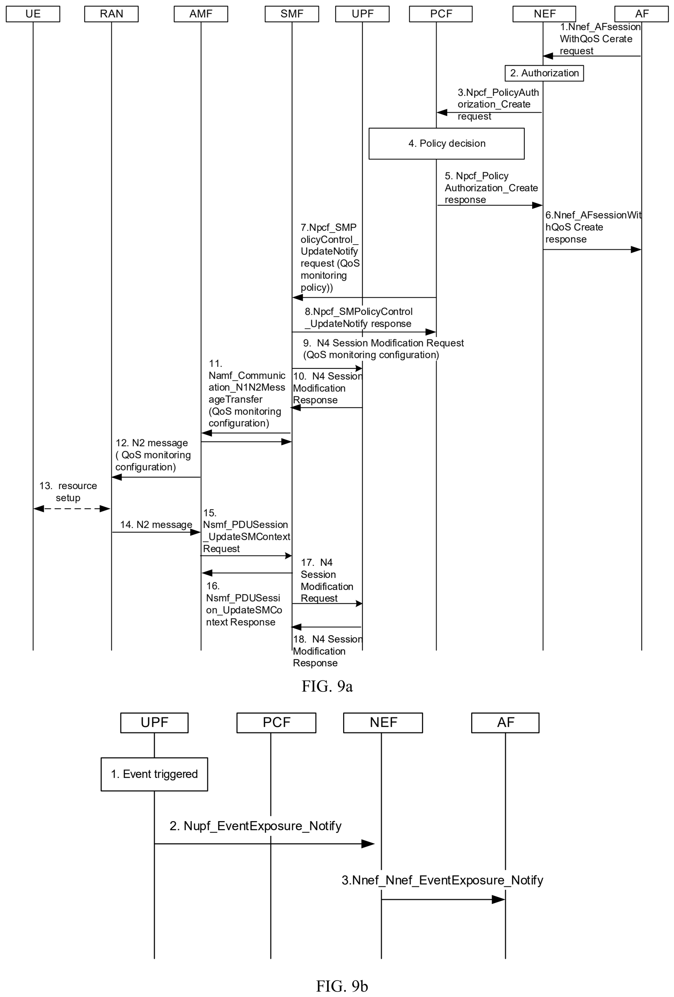

As shown in FIG. 9a, an information processing method may include the following steps.
1. An AF sends an AF session resource request, for example, an AF request is created through Nnef_AFsessionWithQoS_Create request.

The AF carries a round-trip latency requirement or a two-way delay budget of XRM service related media data flow in a request message. The round-trip latency requirement or the two-way delay budget includes an uplink RT latency and a downlink RT latency, or an uplink latency PDB or a downlink latency PDB.

In some examples, the AF session resource request carries XRM service information, such as common ID information identifying a service data flow group of the XRM service, a UE address/UE identifier, an AF identifier, an application ID, flow description, a DNN (data network name), an S-NSSAI (single network slice selection assistance information) and/or a QoS parameter and other corresponding information. Here, the common ID may be configured to identify all service flows in an XRM service group.

2. An NEF authorizes the AF request. If it is an untrusted AF, the AF request is sent to the PCF through the NEF.

In some examples, the NEF performs relevant mappings, including mapping of AF-Service-Identifier to DNN and S-NSSAI, mapping of an external application to a CN application identifier. Mapping of an external UE identifier to a CN internal UE identifier (such as SUPI (subscription permanent identifier)) is performed based on UDM subscription information, and mapping of external to internal XRM service group identifiers based on the UDM subscription information.

3. The NEF authorizes the AF request and determines whether to invoke the TSCTSF or to directly contact the PCF depending on parameters provided by the AF. The PCF receives AF provided attributes from the NEF or the TSCTSF. The NEF triggers an Npcf_PolicyAuthorization_Create request, and sends the AF request to the PCF with carrying the round-trip latency requirement information, such that the PCF makes a policy decision. A message carries XRM service related information in the AF request.

4. The PCF makes the policy decision. The PCF may determine that updated or new policy information needs to be sent to the SMF.

The PCF splits the RT latency into an uplink PDB and a downlink PDB according to the RT latency requirement. The uplink PDB and the downlink PDB may be unequal, but their sum shall not exceed the RT latency. The PCF decides to generate an RT association identifier, such as a common identifier/peer ID/round-trip group ID/peer indication. The association identifier is used to associate round-trip uplink and downlink SDF/QoS flow/PCC rule/5QI (PDB).

The RT latency can be tracked by monitoring an UL delay for an UL QoS flow and a DL delay for a DL QoS flow respectively.

The PCF may adjust the UL PDB and the DL PDB based on a QoS monitoring report and the common identifier/peer ID/ round-trip group ID/peer indication. For example, the PCF receives an UL QoS monitoring report, a DL PCC rule may be identified based on the common identifier/peer ID/ round-trip group ID/peer indication, and the PCF may adjust the DL PCC rule with an UL PCC rule together. That is, the PCF can adjust the UL PCC rule and/or the DL PCC rule (for example, UL PDB and/or DL PDB, UL 5QI and/or DL 5QI) based on the QoS monitoring report and the association ID. For example, the PCF receives the UL QoS monitoring report, and may find the DL PCC rule based on the association ID, and the PCF may adjust the UP PCC rule with the DL PCC rule (for example, UP PDB and/or DL PDB, UP 5QI and/or DL 5QI) together.

In some examples, the PCF decides to generate the association identifier based on the RT latency requirement indication, and/or XRM service subscription information and/or operator policy. For example, in the requirement indication, the service subscription or the operator policy, update of the rule or 5QI for the RT latency is supported, then the association identifier is generated to identify the uplink and downlink SDF/QoS flow/PCC rule/5QI (PDB).

In some examples, the PCF adjusts the UP PCC rule and/or the DL PCC rule (e.g., UP PDB and/or DL PDB, UP 5QI and/or DL 5QI) based on the QoS monitoring report and the association ID, which may include that the PCF directly triggering a PCC rule update, or the PCF notifies the QoS monitoring report to the AF causing the AF to trigger the PCC rule update.

In some examples, the PCF directly or indirectly triggers the PCC rule update, which may include updating a corresponding PDB and assigning a corresponding 5QI to an updated PDB.

In some examples, the PCF stores association ID information locally, or stores the association ID information to a UDR or a UDSF.

In some examples, the AF provides enhanced round-trip latency requirement information to the PCF, which can be sent directly to the PCF or indirectly to the PCF. The indirect sending includes: 1) sending to the PCF through the NEF, 2) or sending to the PCF through the TSCTSF, 3) or sending to the PCF through the TSCTSF and the NEF.

In some examples, the PCF triggers Npcf_SMPolicyControl_UpdateNotify to update policy information of a corresponding PDU session of the SMF, including a PCC rule and a QoS policy related to the AF request.

5. The PCF responds to the NEF a Npcf_Policy Authorization_Create response.

6. The NEF sends a Nnef_AFsessionWithQoS_Create response message to the AF. The response message carries Result, indicating whether the request is authorized.

7. The PCF initiates an SM policy association modification request (PCC rule (QoS monitoring policy)) to the SMF.

Based on the QoS monitoring policy for measurement from the PCF, the SMF generates a QoS monitoring configuration for the UPF (and for the RAN, if needed), as described in step 4.

8. The SMF replies an SM policy association modification response to the PCF.

9. The SMF initiates an N4 session modification request (QoS monitoring configuration) to the UPF.

10. Upon reception of the QoS monitoring configuration, the UPF enables the measurement and report. The UPF responds to the SMF.

11. For SMF requested modification, the SMF invokes Namf_Communication_N1N2MessageTransfer ([N2 SM information] (PDU Session ID, QFI(s), QoS Profile(s), QoS monitoring configuration), N1 SM container)).

12. The AMF may send N2 ([N2 SM information received from SMF], NAS message (PDU Session ID, N1 SM container (PDU session modification command))) message to the (R)AN.

Upon reception of the QoS monitoring configuration, the RAN enables the event measurement and report (e.g. RAN detects the UL delay and DL delay, and a sum of the UL PDB and DL PDB as the RT latency).

13. Resource setup.

14. The (R)AN may acknowledge an N2 PDU session request by sending a N2 PDU session ACK (acknowledgement) message to the AMF.

15. The AMF forwards the N2 SM information received from the AN to the SMF via Nsmf_PDUSession_UpdateSMContext service operation.

16. The SMF replies with a Nsmf_PDUSession_UpdateSMContext response.

17-18. The SMF may update a N4 session of the UPF(s) that are involved by the PDU session modification by sending a N4 session modification request message to the UPF. When the PCF receives the QoS monitoring report, the PCF may:
notify the QoS monitoring report to the AF (directly or indirectly), such that the AF may trigger the PCC rule update, trigger an AF session update or release procedure; or,
adjust the UP PCC rule and/or DL PCC rule (e.g., UP uplink PDB and/or DL PDB, UP 5QI and/or DL 5QI) based on the QoS monitoring report and the association ID, which may directly trigger the PCC rule update for the PCF.

In some examples, the PCF directly or indirectly triggers the PCC rule update, which may include updating the corresponding PDB and assigning the corresponding 5QI to the updated PDB.

The PCF may adjust the UP PDB and the DL PDB according to the QoS monitoring report and the peer ID/ round-trip group ID/peer indication. For example, after the PCF receives an UL QoS monitoring report, a DL PCC rule may be identified based on the peer ID/round-trip group ID/ peer indication, the PCF may adjust the DL PCC rule with the UL PCC rule together.

That is, the PCF may adjust the UL PCC rule and/or the DL PCC rule (for example, UL PDB and/or DL PDB, UL 5QI and/or DL 5QI) based on the QoS monitoring report and the association identifier. For example, when receiving an UL QoS monitoring report, the PCF may find the DL PCC rule based on the association identifier. The PCF may adjust the UL PCC rule with the DL PCC rule (for example, UL PDB and/or DL PDB, UL 5QI and/or DL 5QI) together.

The AF provides the RT requirement information to the PCF. In this example, the following is described: 1) the AF provides the RT latency requirement to the PCF during an AF session with required QoS creation procedure; the RT latency requirement may also be provided through the following procedure:
2) or, the AF provides the RT latency requirement to the PCF during an AF session with required QoS update procedure;
3) or, the AF provides the RT latency requirement to the PCF during a service specific parameter provisioning procedure;
4) or, the AF provides the RT latency requirement to the PCF during a procedure for setting a policy for an AF session.

The QoS monitoring report reporting triggering procedure may be a procedure of reporting through notification information, or a procedure of reporting through a control plane (CP) from the UPF to the SMF to the PCF (the PCF reports to the AF).

An embodiment of the present disclosure provides an information processing method. The UPF may send the QoS monitoring report to the PCF, causing the PCF to trigger a rule update.

As shown in FIG. 9b, the information processing method may include the following steps.
1. When the event detected/reached, the report will be triggered (e.g. achieved a threshold, or period timer overtime), the UPF triggers a Nupf_EventExposure_Notify message to report measured information.
2. The UPF sends the Nupf_EventExposure_Notify message (measured two way delay budget status information) to the NEF.

The UPF reports the message to the AF (via NEF) to trigger a corresponding session update, or the UPF sends the QoS monitoring report to the PCF (via SMF) causing the PCF to trigger the rule update. The PCF reports to the AF to trigger the update or the PCF triggers the update locally.

3. The NEF sends the Nnef_Nnef_EventExposure_Notify (measured two way delay budget status information) message to the AF.

When the UPF reports a notification (for example, an uplink QoS monitoring report (UL QoS monitoring report)) to the AF through the NEF, the NEF may obtain the association identifier or association SDF information from the PCF, and the NEF obtains a notification of an association SDF from the UPF (for example, a downlink QoS monitoring report (DL QoS monitoring report)), based on the association identifier or the association SDF information.

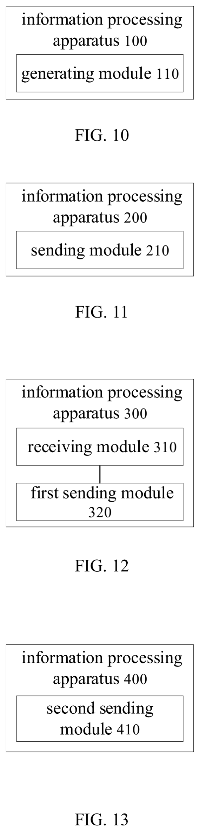

FIG. 10 is a block diagram of an information processing apparatus according to an illustrative embodiment. The information processing apparatus is applied to a first network function. As shown in FIG. 10, the information processing apparatus 100 may include:
a generating module 110, configured to generate an association identifier, in which, the association identifier is configured to associate an uplink data flow with a downlink data flow.

In an embodiment, the apparatus may further include:
a first receiving module, configured to receive a monitoring report of the uplink data flow and/or the downlink data flow sent by a second network function, in which, the monitoring report carries an actual latency of the uplink data flow and/or the downlink data flow;
a first updating module, configured to update, according to the monitoring report and the association identifier, a policy and control charging (PCC) rule of the uplink data flow and/or a PCC rule of the downlink data flow.

In an embodiment, the first update module is configured to:
send the monitoring report to a third network function;
receive an update indication sent by the third network function according to the monitoring report; and
update, according to the update indication and the association identifier, the PCC rule of the uplink data flow and/or the PCC rule of the downlink data flow.

In an embodiment, the first update module is configured to:
determine, according to the monitoring report, whether to update the PCC rule of the uplink data flow and/or the PCC rule of the downlink data flow; and
in a case of determining to update the PCC rule of the uplink data flow and/or the PCC rule of the downlink data flow, update, according to the monitoring report and the association identifier, the PCC rule of the uplink data flow and/or the PCC rule of the downlink data flow.

In an embodiment, the apparatus further includes a second receiving module.

The second receiving module is configured to receive an update indication sent by a third network function according to a monitoring report carrying an actual latency of the uplink data flow and/or the downlink data flow, in which, the monitoring report is forwarded by the second network function to the third network function via a fourth network function.

The second receiving module is configured to update, according to the update indication and the association identifier, the PCC rule of the uplink data flow and/or the PCC rule of the downlink data flow.

In an embodiment, the PCC rule includes at least one of:
a fifth generation quality of service identifier (5QI);
a packet delay budget (PDB); or
a packet data unit (PDU) set delay budget (PSDB).

In an embodiment, the actual latency includes at least one of:
a PDB; or
a PSDB.

In an embodiment, the generating module 110 is configured to:
generate the association identifier according to a round-trip latency requirement indication, service subscription information and/or an operator policy.

In an embodiment, the apparatus further includes:
a third receiving module, configured to receive the round-trip latency requirement indication sent by a third network function.

In an embodiment, the third receiving module is configured to:
receive the round-trip latency requirement indication directly sent by the third network function; or,
receive the round-trip latency requirement indication forwarded by a fourth network function which is from the third network function; or,
receive the round-trip latency requirement indication forwarded by a fifth network function which is from the third network function; or,
receive the round-trip latency requirement indication forwarded by the fifth network function via the fourth network function which is from the third network function.

In an embodiment, the third receiving module is configured to:
during a session creation procedure initiated by the third network function, receive the round-trip latency requirement indication sent by the third network function; or,
during a session update procedure initiated by the third network function, receive the round-trip latency requirement indication sent by the third network function; or,
during a service parameter provisioning procedure, receive the round-trip latency requirement indication sent by the third network function; or,
during a procedure for setting a policy for a session initiated by the third network function, receive the round-trip latency requirement indication sent by the third network function.

In an embodiment, the apparatus further includes: a storage module, configured to:
locally store the association identifier; or,
store the association identifier in a unified data repository (UDR) and/or an unstructured data storage function (UDSF).

In an embodiment, the uplink data flow identified by the association identifier corresponds to an uplink latency, and the downlink data flow identified by the association identifier corresponds to a downlink latency, a sum of the uplink latency and the downlink latency is less than or equal to a round-trip latency.

In an embodiment, the first network function is a policy control function (PCF).

FIG. 11 is a block diagram of an information processing apparatus according to an illustrative embodiment. The information processing apparatus is applied to a second network function. As shown in FIG. 11, the information processing apparatus 200 may include:
a sending module 210, configured to send, by a second network function, a monitoring report of an uplink data flow and/or a downlink data flow to a first network function, or to send, by the second network function, the monitoring report to a third network function via a fourth network function, in which, the monitoring report carries an actual latency of the uplink data flow and/or the downlink data flow, the monitoring report and an association identifier configured to associate the uplink data flow with the downlink data flow are configured to update a policy and control charging (PCC) rule of the uplink data flow and/or a PCC rule of the downlink data flow.

In an embodiment, the PCC rule includes at least one of:
a fifth generation quality of service identifier (5QI);
a packet delay budget (PDB); or
a packet data unit (PDU) set delay budget (PSDB).

In an embodiment, the actual latency includes at least one of:
a PDB; or
a PSDB.

In an embodiment, the uplink data flow identified by the association identifier corresponds to an uplink latency, and the downlink data flow identified by the association identifier corresponds to a downlink latency, a sum of the uplink latency and the downlink latency is less than or equal to a round-trip latency.

In an embodiment, the second network function is a user plane function (UPF).

FIG. 12 is a block diagram of an information processing apparatus according to an illustrative embodiment. The information processing apparatus is applied to a third network function. As shown in FIG. 12, the information processing apparatus 300 may include:
a receiving module 310, configured to receive a monitoring report of an uplink data flow and/or a downlink data flow sent by a first network function or the monitoring report forwarded by a fourth network function which is from a second network function, in which, the monitoring report carries an actual latency of the uplink data flow and/or the downlink data flow; and
a first sending module 320, configured to send an update indication to the first network function according to the monitoring report, in which, the update indication and an association identifier configured to associate the uplink data flow with the downlink data flow are configured to update a policy and control charging (PCC) rule of the uplink data flow and/or a PCC rule of the downlink data flow.

In an embodiment, the PCC rule includes at least one of:
a fifth generation quality of service identifier (5QI);
a packet delay budget (PDB); or
a packet data unit (PDU) set delay budget (PSDB).

In an embodiment, the actual latency includes at least one of:
a PDB; or
a PSDB.

In an embodiment, the apparatus further includes:
a second sending module, configured to send a round-trip latency requirement indication to the first network function, in which, the round-trip latency requirement indication is configured for the first network function to generate the association identifier.

In an embodiment, the second sending module is configured to:
directly send the round-trip latency requirement indication to the first network function; or,
forward the round-trip latency requirement indication to the first network function via a fourth network function; or,
forward the round-trip latency requirement indication to the first network function via a fifth network function device; or,
forward the round-trip latency requirement indication to the fourth network function via the fifth network function, in which, the round-trip latency requirement indication is configured to be provided for the fourth network function to forward to the first network function.

In an embodiment, the second sending module is configured to:
during a session creation procedure initiated by the third network function, send the round-trip latency requirement indication to the first network function; or,
during an application function (AF) session update procedure initiated by the third network function, send the round-trip latency requirement indication to the first network function; or,
during a service parameter provisioning procedure, send the round-trip latency requirement indication to the first network function; or,
during a procedure for setting a policy for a session initiated by the third network function, send the round-trip latency requirement indication to the first network function.

In an embodiment, the uplink data flow identified by the association identifier corresponds to an uplink latency, and the downlink data flow identified by the association identifier corresponds to a downlink latency, a sum of the uplink latency and the downlink latency is less than or equal to a round-trip latency.

In an embodiment, the third network function is an application function (AF).

FIG. 13 is a block diagram of an information processing apparatus according to an illustrative embodiment. The information processing apparatus is applied to a third network function. As shown in FIG. 13, the information processing apparatus 400 may include:
a second sending module 410, configured to send a round-trip latency requirement indication to a first network function, in which, the round-trip latency requirement indication is configured for the first network function to generate an association identifier, the association identifier is configured to associate an uplink data flow with a downlink data flow.

In an embodiment, the second sending module 410 is configured to:
directly send the round-trip latency requirement indication to the first network function; or,
forward the round-trip latency requirement indication to the first network function via a fourth network function; or,
forward the round-trip latency requirement indication to the first network function via a fifth network function device; or,
forward the round-trip latency requirement indication to the fourth network function via the fifth network function, in which, the round-trip latency requirement indication is configured to be provided for the fourth network function to forward to the first network function.

In an embodiment, the second sending module 410 is configured to:
during a session creation procedure initiated by the third network function, send the round-trip latency requirement indication to the first network function; or,
during a session update procedure initiated by the third network function, send the round-trip latency requirement indication to the first network function; or,
during a service parameter provisioning procedure, send the round-trip latency requirement indication to the first network function; or,
during a procedure for setting a policy for a session initiated by the third network function, send the round-trip latency requirement indication to the first network function.

In an embodiment, the apparatus further includes:
a receiving module, configured to receive a monitoring report of the uplink data flow and/or the downlink data flow sent by the first network function or the monitoring report forwarded by a fourth network function which is from a second network function, in which, the monitoring report carries an actual latency of the uplink data flow and/or the downlink data flow; and
a first sending module, configured to send an update indication to the first network function according to the monitoring report, in which, the update indication and the association identifier configured to associate the uplink data flow with the downlink data flow are configured to update a policy and control charging (PCC) rule of the uplink data flow and/or a PCC rule of the downlink data flow.

In an embodiment, the PCC rule includes at least one of:
a fifth generation quality of service identifier (5QI);
a packet delay budget (PDB); or
a packet data unit (PDU) set delay budget (PSDB).

In an embodiment, the actual latency carried in the monitoring report includes at least one of:
a PDB; or
a PSDB.

In an embodiment, the uplink data flow identified by the association identifier corresponds to an uplink latency, and the downlink data flow identified by the association identifier corresponds to a downlink latency, a sum of the uplink latency and the downlink latency is less than or equal to a round-trip latency.

In an embodiment, the third network function is an application function (AF).

Regarding the above-mentioned apparatus embodiment, a specific manner in which each module performs operations has been described in detail in the method embodiments, and will not be repeated here.

An embodiment of the present disclosure provides a communication system, including: a first network function, a second network function and a third network function;
The first network function is configured to generate an association identifier, in which, the association identifier is configured to associate an uplink data flow with a downlink data flow.

The second network function is configured to send a monitoring report of an uplink data flow and/or a downlink data flow to a first network function, or send the monitoring report to a third network function via a fourth network function, in which, the monitoring report carries an actual latency of the uplink data flow and/or the downlink data flow; the monitoring report and an association identifier configured to associate the uplink data flow with the downlink data flow are configured to update a policy and control charging (PCC) rule of the uplink data flow and/or a PCC rule of the downlink data flow.

The third network function is configured to, receive a monitoring report of an uplink data flow and/or a downlink data flow sent by a first network function or the monitoring report forwarded by a fourth network function which is from a second network function, in which, the monitoring report carries an actual latency of the uplink data flow and/or the downlink data flow; and send an update indication to the first network function according to the monitoring report, in which, the update indication and an association identifier configured to associate the uplink data flow with the downlink data flow are configured to update the PCC rule of the uplink data flow and/or the PCC rule of the downlink data flow.

In an embodiment, the first network function is configured to:
receive a monitoring report of the uplink data flow and/or the downlink data flow sent by a second network function, in which, the monitoring report carries an actual latency of the uplink data flow and/or the downlink data flow;
update, according to the monitoring report and the association identifier, the PCC rule of the uplink data flow and/or the PCC rule of the downlink data flow.

In an embodiment, the first network function is configured to:
send the monitoring report to the third network function;
receive an update indication sent by the third network function according to the monitoring report; and
update, according to the update indication and the association identifier, the PCC rule of the uplink data flow and/or the PCC rule of the downlink data flow.

In an embodiment, the first network function is configured to:
determine, according to the monitoring report, whether to update the PCC rule of the uplink data flow and/or the PCC rule of the downlink data flow; and
in a case of determining to update the PCC rule of the uplink data flow and/or the PCC rule of the downlink data flow, update, according to the monitoring report and the association identifier, the PCC rule of the uplink data flow and/or the PCC rule of the downlink data flow.

In an embodiment, the first network function is configured to:
receive an update indication sent by the third network function according to a monitoring report carrying an actual latency of the uplink data flow and/or the downlink data flow, wherein the monitoring report is forwarded by the second network function to the third network function via a fourth network function; and
update, according to the update indication and the association identifier, the PCC rule of the uplink data flow and/or the PCC rule of the downlink data flow.

In an embodiment, the first network function is configured to:
generate the association identifier according to a round-trip latency requirement indication, service subscription information and/or an operator policy

In an embodiment, the first network function is configured to:
receive the round-trip latency requirement indication sent by the third network function.

In an embodiment, the first network function is configured to:
receive the round-trip latency requirement indication directly sent by the third network function; or,
receive the round-trip latency requirement indication forwarded by a fourth network function which is from the third network function; or,
receive the round-trip latency requirement indication forwarded by a fifth network function which is from the third network function; or,
receive the round-trip latency requirement indication forwarded by the fifth network function via the fourth network function which is from the third network function.

In an embodiment, the first network function is configured to:
during a session creation procedure initiated by the third network function, receive the round-trip latency requirement indication sent by the third network function; or,
during a session update procedure initiated by the third network function, receive the round-trip latency requirement indication sent by the third network function; or,
during a service parameter provisioning procedure, receive the round-trip latency requirement indication sent by the third network function; or,
during a procedure for setting a policy for a session initiated by the third network function, receive the round-trip latency requirement indication sent by the third network function.

In an embodiment, the first network function is configured to:
locally store the association identifier; or,
store the association identifier in a UDR and/or a UDSF.

In an embodiment, the uplink data flow identified by the association identifier corresponds to an uplink latency, and the downlink data flow identified by the association identifier corresponds to a downlink latency, a sum of the uplink latency and the downlink latency is less than or equal to a round-trip latency.

In an embodiment, the first network function is a PCF.

In an embodiment, the second network function is a UPF.

In an embodiment, the third network function is configured to:
send a round-trip latency requirement indication to the first network function, in which, the round-trip latency requirement indication is configured for the first network function to generate the association identifier.

In an embodiment, the third network function is configured to:
directly send the round-trip latency requirement indication to the first network function; or,
forward the round-trip latency requirement indication to the first network function via a fourth network function; or,
forward the round-trip latency requirement indication to the first network function via a fifth network function device; or,
forward the round-trip latency requirement indication to the fourth network function via the fifth network function, in which, the round-trip latency requirement indication is configured to be provided for the fourth network function to forward to the first network function.

In an embodiment, the third network function is configured to:
during a session creation procedure initiated by the third network function, send the round-trip latency requirement indication to the first network function; or,
during an application function (AF) session update procedure initiated by the third network function, send the round-trip latency requirement indication to the first network function; or,
during a service parameter provisioning procedure, send the round-trip latency requirement indication to the first network function; or,
during a procedure for setting a policy for a session initiated by the third network function, send the round-trip latency requirement indication to the first network function.

In an embodiment, the uplink data flow identified by the association identifier corresponds to an uplink latency, and the downlink data flow identified by the association identifier corresponds to a downlink latency, a sum of the uplink latency and the downlink latency is less than or equal to a round-trip latency.

In an embodiment, the third network function is an AF.

In an embodiment, the fourth network function is a NEF.

In an embodiment, the fifth network function is a TSCTSF.

An embodiment of the present disclosure provides a communication device, including: a processor, a memory, and executable instructions stored on the memory and capable of being run by the processor, in which, the processor is configured to: implement the information processing method according to any embodiment of the present disclosure when executing the executable instructions.

The processor may include various types of storage media, which are non-temporary computer storage media that can continue to memorize information stored thereon after a communication device loses power.

Here, the communication device includes: a network function, which may be any one of the first to third network functions mentioned above.

The processor may be connected to the memory via a bus or the like, and may be used to read an executable program stored in the memory, for example, at least one of the information processing methods as shown in FIG. 2 to FIG. 9a and FIG. 9b.

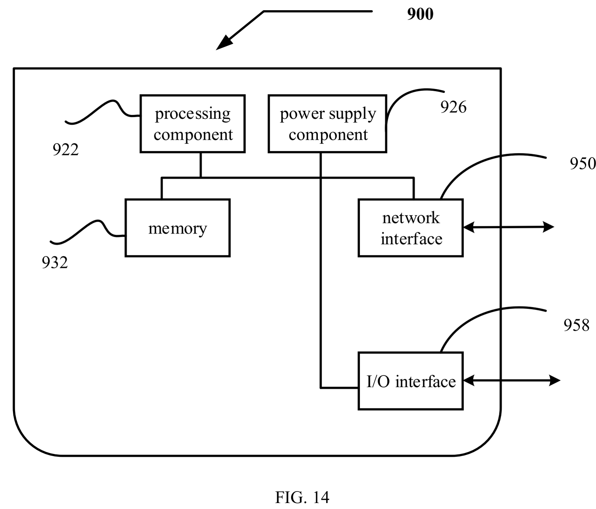

As shown in FIG. 14, an embodiment of the present disclosure shows a structure of a communication device. Referring to FIG. 14, the communication device 900 includes a processing component 922, which further includes one or more processors, and a memory resource represented by a memory 932 for storing instructions executable by the processing component 922, such as an application. The application stored in the memory 932 may include one or more modules, each corresponding to a set of instructions. In addition, the processing component 922 is configured to execute instructions to execute the aforementioned information processing method of any one of the above embodiments.

The communication device 900 may also include a power supply component 926 configured to perform power management of the communication device 900, a wired or wireless network interface 950 configured to connect the communication device 900 to a network, and an input/output (I/O) interface 958. The communication device 900 may operate based on an operating system stored in the memory 932, such as Windows Server TM, Mac OS X TM, Unix TM, Linux TM, FreeBSD TM or the like.

In an embodiment, a non-transitory computer-readable storage medium including instructions is also provided, such as a memory 932 including instructions, and the instructions can be executed by a processing component 922 of the communication device 900 to perform any of the above methods applied in the communication device. For example, the non-transitory computer-readable storage medium may be a ROM, a random access memory (RAM), a CD-ROM, a magnetic tape, a floppy disk, an optical data storage device, etc.

After referring to the specification and practicing the invention disclosed herein, those skilled in the art will readily appreciate other embodiments of the present disclosure. The present disclosure is intended to cover any variations, uses or adaptations of the present disclosure, and the variations, uses or adaptations follow a general principle of the present disclosure and include common knowledge or customary techniques in the art that are not disclosed in the present disclosure. The specification and the embodiments are to be considered illustrative only, and the true scope and spirit of the present disclosure are indicated by the following claims.

It is appreciated that the present disclosure is not limited to the exact construction that has been described above and shown in the drawings and that various modifications and changes can be made without departing from the scope thereof. The scope of the present disclosure is limited only by the appended claims.

## Claims

1. An information processing method, performed by a first network function, comprising:
generating an association identifier, wherein the association identifier is configured to associate an uplink data flow with a downlink data flow.

2. The method according to claim 1, further comprising:
receiving a monitoring report of the uplink data flow and/or the downlink data flow sent by a second network function, wherein the monitoring report carries an actual latency of the uplink data flow and/or the downlink data flow;
updating, according to the monitoring report and the association identifier, a policy and control charging (PCC) rule of the uplink data flow and/or a PCC rule of the downlink data flow.

3. The method according to claim 2, wherein updating, according to the monitoring report and the association identifier, the PCC rule of the uplink data flow and/or the PCC rule of the downlink data flow comprises:
sending the monitoring report to a third network function;
receiving an update indication sent by the third network function according to the monitoring report; and
updating, according to the update indication and the association identifier, the PCC rule of the uplink data flow and/or the PCC rule of the downlink data flow.

4. The method according to claim 2, wherein updating, according to the monitoring report and the association identifier, the PCC rule of the uplink data flow and/or the PCC rule of the downlink data flow comprises:
determining, according to the monitoring report, whether to update the PCC rule of the uplink data flow and/or the PCC rule of the downlink data flow; and
in a case of determining to update the PCC rule of the uplink data flow and/or the PCC rule of the downlink data flow, updating, according to the monitoring report and the association identifier, the PCC rule of the uplink data flow and/or the PCC rule of the downlink data flow.

5. The method according to claim 1, further comprising:
receiving an update indication sent by a third network function according to a monitoring report carrying an actual latency of the uplink data flow and/or the downlink data flow, wherein the monitoring report is forwarded by the second network function to the third network function via a fourth network function; and
updating, according to the update indication and the association identifier, the PCC rule of the uplink data flow and/or the PCC rule of the downlink data flow.

6. The method according to any one of claims 2 to 5, wherein the PCC rule comprises at least one of:
a fifth generation quality of service identifier (5QI);
a packet delay budget (PDB); or
a packet data unit (PDU) set delay budget (PSDB).

7. The method according to any one of claims 2 to 5, wherein the actual latency comprises at least one of:
a PDB; or
a PSDB.

8. The method according to any one of claims 1 to 7, wherein generating the association identifier comprises:
generating the association identifier according to a round-trip latency requirement indication, service subscription information and/or an operator policy.

9. The method according to claim 8, further comprising:
receiving the round-trip latency requirement indication sent by a third network function.

10. The method according to claim 9, wherein receiving the round-trip latency requirement indication sent by the third network function comprises:
receiving the round-trip latency requirement indication directly sent by the third network function;
or,
receiving the round-trip latency requirement indication forwarded by a fourth network function which is from the third network function;
or,
receiving the round-trip latency requirement indication forwarded by a fifth network function which is from the third network function;
or,
receiving the round-trip latency requirement indication forwarded by the fifth network function via the fourth network function which is from the third network function.

11. The method according to claim 9 or 10, wherein receiving the round-trip latency requirement indication sent by the third network function comprises:
during a session creation procedure initiated by the third network function, receiving the round-trip latency requirement indication sent by the third network function;
or,
during a session update procedure initiated by the third network function, receiving the round-trip latency requirement indication sent by the third network function;
or,
during a service parameter provisioning procedure, receiving the round-trip latency requirement indication sent by the third network function;
or,
during a procedure for setting a policy for a session initiated by the third network function, receiving the round-trip latency requirement indication sent by the third network function.

12. The method according to any one of claims 1 to 11, further comprising:
locally storing the association identifier;
or,
storing the association identifier in a unified data repository (UDR) and/or an unstructured data storage function (UDSF).

13. The method according to any one of claims 1 to 12, wherein the uplink data flow identified by the association identifier corresponds to an uplink latency, and the downlink data flow identified by the association identifier corresponds to a downlink latency, a sum of the uplink latency and the downlink latency is less than or equal to a round-trip latency.

14. The method according to any one of claims 1 to 13, wherein the first network function is a policy control function (PCF).

15. An information processing method, performed by a second network function, comprising:
sending, by the second network function, a monitoring report of an uplink data flow and/or a downlink data flow to a first network function, or sending, by the second network function, the monitoring report to a third network function via a fourth network function, wherein the monitoring report carries an actual latency of the uplink data flow and/or the downlink data flow; the monitoring report and an association identifier configured to associate the uplink data flow with the downlink data flow are configured to update a policy and control charging (PCC) rule of the uplink data flow and/or a PCC rule of the downlink data flow.

16. The method according to claim 15, wherein the PCC rule comprises at least one of:
a fifth generation quality of service identifier (5QI);
a packet delay budget (PDB); or
a packet data unit (PDU) set delay budget (PSDB).

17. The method according to claim 15, wherein the actual latency carried in the monitoring report comprises at least one of:
a PDB; or
a PSDB.

18. The method according to any one of claims 15 to 17, wherein the uplink data flow identified by the association identifier corresponds to an uplink latency, and the downlink data flow identified by the association identifier corresponds to a downlink latency, a sum of the uplink latency and the downlink latency is less than or equal to a round-trip latency.

19. The method according to any one of claims 15 to 18, wherein the second network function is a user plane function (UPF).

20. An information processing method, performed by a third network function, comprising:
receiving a monitoring report of an uplink data flow and/or a downlink data flow sent by a first network function or the monitoring report forwarded by a fourth network function which is from a second network function, wherein the monitoring report carries an actual latency of the uplink data flow and/or the downlink data flow; and
sending an update indication to the first network function according to the monitoring report, wherein the update indication and an association identifier configured to associate the uplink data flow with the downlink data flow are configured to update a policy and control charging (PCC) rule of the uplink data flow and/or a PCC rule of the downlink data flow.

21. The method according to claim 20, wherein the PCC rule comprises at least one of:
a fifth generation quality of service identifier (5QI);
a packet delay budget (PDB); or
a packet data unit (PDU) set delay budget (PSDB).

22. The method according to claim 20, wherein the actual latency carried in the monitoring report comprises at least one of:
a PDB; or
a PSDB.

23. The method according to claim 21 or 22, further comprising:
sending a round-trip latency requirement indication to the first network function, wherein the round-trip latency requirement indication is configured for the first network function to generate the association identifier.

24. The method according to claim 23, wherein sending the round-trip latency requirement indication to the first network function comprises:
directly sending the round-trip latency requirement indication to the first network function;
or,
forwarding the round-trip latency requirement indication to the first network function via a fourth network function;
or,
forwarding the round-trip latency requirement indication to the first network function via a fifth network function device;
or,
forwarding the round-trip latency requirement indication to the fourth network function via the fifth network function, wherein the round-trip latency requirement indication is configured to be provided for the fourth network function to forward to the first network function.

25. The method according to claim 23 or 24, wherein sending the round-trip latency requirement indication to the first network function comprises:
during a session creation procedure initiated by the third network function, sending the round-trip latency requirement indication to the first network function;
or,
during an application function (AF) session update procedure initiated by the third network function, sending the round-trip latency requirement indication to the first network function;
or,
during a service parameter provisioning procedure, sending the round-trip latency requirement indication to the first network function;
or,
during a procedure for setting a policy for a session initiated by the third network function, sending the round-trip latency requirement indication to the first network function.

26. The method according to any one of claims 23 to 25, wherein the uplink data flow identified by the association identifier corresponds to an uplink latency, and the downlink data flow identified by the association identifier corresponds to a downlink latency, a sum of the uplink latency and the downlink latency is less than or equal to a round-trip latency.

27. The method according to any one of claims 23 to 26, wherein the third network function is an application function (AF).

28. An information processing method, performed by a third network function, comprising:
sending a round-trip latency requirement indication to a first network function, wherein the round-trip latency requirement indication is configured for the first network function to generate an association identifier, the association identifier is configured to associate an uplink data flow with a downlink data flow.

29. The method according to claim 28, wherein sending the round-trip latency requirement indication to the first network function comprises:
directly sending the round-trip latency requirement indication to the first network function;
or,
forwarding the round-trip latency requirement indication to the first network function via a fourth network function;
or,
forwarding the round-trip latency requirement indication to the first network function via a fifth network function device;
or,
forwarding the round-trip latency requirement indication to the fourth network function via the fifth network function, wherein the round-trip latency requirement indication is configured to be provided for the fourth network function to forward to the first network function.

30. The method according to claim 28 or 29, wherein sending the round-trip latency requirement indication to the first network function comprises:
during a session creation procedure initiated by the third network function, sending the round-trip latency requirement indication to the first network function;
or,
during a session update procedure initiated by the third network function, sending the round-trip latency requirement indication to the first network function;
or,
during a service parameter provisioning procedure, sending the round-trip latency requirement indication to the first network function;
or,
during a procedure for setting a policy for a session initiated by the third network function, sending the round-trip latency requirement indication to the first network function.

31. The method according to any one of claims 28 to 30, further comprising:
receiving a monitoring report of the uplink data flow and/or the downlink data flow sent by the first network function or the monitoring report forwarded by a fourth network function which is from a second network function, wherein the monitoring report carries an actual latency of the uplink data flow and/or the downlink data flow; and
sending an update indication to the first network function according to the monitoring report, wherein the update indication and the association identifier configured to associate the uplink data flow with the downlink data flow are configured to update a policy and control charging (PCC) rule of the uplink data flow and/or a PCC rule of the downlink data flow.

32. The method according to claim 31, wherein the PCC rule comprises at least one of:
a fifth generation quality of service identifier (5QI);
a packet delay budget (PDB); or
a packet data unit (PDU) set delay budget (PSDB).

33. The method according to claim 31, wherein the actual latency carried in the monitoring report comprises at least one of:
a PDB; or
a PSDB.

34. The method according to any one of claims 28 to 33, wherein the uplink data flow identified by the association identifier corresponds to an uplink latency, and the downlink data flow identified by the association identifier corresponds to a downlink latency, a sum of the uplink latency and the downlink latency is less than or equal to a round-trip latency.

35. The method according to any one of claims 28 to 34, wherein the third network function is an application function (AF).

36. An information processing apparatus, comprising:
a generating module, configured to generate an association identifier, wherein the association identifier is configured to associate an uplink data flow with a downlink data flow.

37. An information processing apparatus, comprising:
a sending module, configured to send, by a second network function, a monitoring report of an uplink data flow and/or a downlink data flow to a first network function, or to send, by the second network function, the monitoring report to a third network function via a fourth network function, wherein the monitoring report carries an actual latency of the uplink data flow and/or the downlink data flow, the monitoring report and an association identifier configured to associate the uplink data flow with the downlink data flow are configured to update a policy and control charging (PCC) rule of the uplink data flow and/or a PCC rule of the downlink data flow.

38. An information processing apparatus, comprising:
a receiving module, configured to receive a monitoring report of an uplink data flow and/or a downlink data flow sent by a first network function or the monitoring report forwarded by a fourth network function which is from a second network function, wherein the monitoring report carries an actual latency of the uplink data flow and/or the downlink data flow; and
a first sending module, configured to send an update indication to the first network function according to the monitoring report, wherein the update indication and an association identifier configured to associate the uplink data flow with the downlink data flow are configured to update a policy and control charging (PCC) rule of the uplink data flow and/or a PCC rule of the downlink data flow.

39. An information processing apparatus, comprising:
a second sending module, configured to send a round-trip latency requirement indication to a first network function, wherein the round-trip latency requirement indication is configured for the first network function to generate an association identifier, the association identifier is configured to associate an uplink data flow with a downlink data flow.

40. A communication device, comprising: a processor, a memory, and executable instructions stored on the memory and capable of being run by the processor, wherein the processor is configured to implement the information processing method according to any one of claims 1 to 35 when running the executable instructions.

41. A communication system, comprising: a first network function, a second network function and a third network function, wherein
the first network function is configured to implement the information processing method according to any one of claims 1 to 14;
the second network function is configured to implement the information processing method according to any one of claims 15 to 19;
the third network function is configured to implement the information processing method according to any one of claims 20 to 27 or according to any one of claims 28 to 35.

42. A computer storage medium, having an executable program stored thereon, wherein, when the executable program is executed by a processor, the information processing method according to any one of claims 1 to 35 is implemented.
